# EUROPEAN PATENT APPLICATION

(11) **EP 4 799 766 A1**
(43) Date of publication of application: **02.09.2026**
(21) Application number: 26160699.0
(22) Date of filing: 25.02.2026
(51) Int. Cl.: B25F 5/00

(54) **POWER TOOLS WITH PRESENCE DETECTION**

(30) Priority: 26.02.2025 US 202563763441 P; 02.07.2025 US 202563837570 P; 02.07.2025 US 202563837587 P; 02.07.2025 US 202563837598 P
(71) Applicant: Techtronic Cordless GP, Anderson, SC 29621 (US)
(72) Inventor: WILSON, Jeff, Anderson SC, 29621 (US); GIVENS, Robert T., Anderson SC, 29621 (US); KONDRO, Grzegorz, Anderson SC, 29621 (US); FELDKAMP, Jonathan R., Anderson SC, 29621 (US); MCCALLUM, John E., Anderson SC, 29621 (US); MOULD, Keegen R., Anderson SC, 29621 (US); REED, Scott W., Anderson SC, 29621 (US); AMICK Jr., Ashley Bryan, Anderson SC, 29621 (US)
(74) Representative: Zimmermann & Partner Patentanwälte mbB

(57) **Abstract**

A power tool includes a housing including a motor, a work element extending from the housing and operably coupled to the motor, a handle extending from the housing having a first presence sensor, a second presence sensor, and a controller operably coupled to the first presence sensor, the second presence sensor, and the motor. The first presence sensor and the second presence sensor are configured to detect an engaged state in which an operator engages the first presence sensor and the second presence sensor and a disengaged state in which the operator disengages one or both of the first presence sensor and the second presence sensor.

## Description

### CROSS-REFERENCE TO RELATED APPLICATIONS

This application claims priority to U.S. Provisional Patent Application No. 63/763,441, filed February 26, 2025, U.S. Provisional Patent Application No. 63/837,570, filed July 2, 2025, U.S. Provisional Patent Application No. 63/837,587, filed July 2, 2025, and U.S. Provisional Patent Application No. 63/837,598, filed July 2, 2025, the disclosures of which are incorporated herein by reference in their entireties.

### FIELD

The present disclosure relates generally to power tools, and more particularly to power tools with presence detection.

### BACKGROUND

Power tools generally include at least one motive device which drives one or more working implements to perform the work operation. Several types of motive devices have been used to drive the working implement, including gas-powered engines and, more recently, electric motors for power tools.

Power tools typically require a handle or trigger assembly used for activating and deactivating the motor and operating the working implement during use. Additionally, an operator of the power tool typically has to perform additional physical actions to place the power tool in a secure state before operation. Accordingly, improved power tools are desired in the art. In particular, power tools which reduce the number of actions required by a user for operation of the power tool would be advantageous.

### BRIEF DESCRIPTION

Aspects and advantages of the present disclosure will be set forth in part in the following description, or may be obvious from the description, or may be learned through practice of the technology.

In accordance with one embodiment, a power tool is provided. The power tool includes a housing including a motor, a work element extending from the housing and operably coupled to the motor, a handle extending from the housing having a first presence sensor, a second presence sensor, and a controller operably coupled to the first presence sensor, the second presence sensor, and the motor. The power tool also includes one or more removable power sources, such as batteries, for providing power to the power tool in addition to various other power tools, such as chainsaws, lawnmowers, string trimmers, drills, saws, or the like. The first presence sensor and the second presence sensor are configured to detect an engaged state in which an operator engages the first presence sensor and the second presence sensor and a disengaged state in which the operator disengages one or both of the first presence sensor and the second presence sensor. The controller is configured to perform a plurality of operations including receiving first data indicative of operator engagement with the first presence sensor; receiving second data indicative of operator engagement with the second presence sensor; determining, using the first data and the second data, that the power tool is in the engaged state; and controlling operation of the motor based on the power tool being in the engaged state.

In accordance with another embodiment, a method of operating a power tool is provided. The method includes receiving a motor activation signal, detecting engagement of a first presence sensor, detecting engagement of a second presence sensor, activating a motor of the power tool based on engagement of the first presence sensor and the second presence sensor, and deactivating the motor based on disengagement of one or both of the first presence sensor and the second presence sensor.

In accordance with yet another embodiment, a control assembly for a power tool is provided. The control assembly includes a first presence sensor, a second presence sensor, and a controller communicatively coupled to the first presence sensor and the second presence sensor. The controller is configured to perform a plurality of operations including receiving first data indicative of operator engagement with the first presence sensor; receiving second data indicative of operator engagement with the second presence sensor; determining, using the first data and the second data, that the power tool is in an engaged state based on user engagement with both the first presence sensor and the second presence sensor or in a disengaged state based on user disengagement with one or both of the first presence sensor and the second presence sensor; and controlling operation of at least one motor operably coupled to the controller based on the power tool being in the engaged state.

In accordance with an embodiment, a power tool is provided. The power tool includes a housing including a first motor and a second motor, a walking element coupled to the housing and operably coupled to the first motor, a working implement extending from the housing and operably coupled to the second motor, a handle extending from the housing, at least one presence sensor disposed in the handle and operable to detect an engaged state in which an operator engages the at least one presence sensor and a disengaged state in which the operator disengages the at least one presence sensor, and a controller operably coupled to the at least one presence sensor, the first motor, and the second motor. The power tool also includes one or more removable power sources, such as batteries, for providing power to the power tool in addition to various other power tools, such as chainsaws, lawnmowers, string trimmers, drills, saws, or the like. The walking element is configured to move the power tool. The controller is configured to perform a plurality of operations. The plurality of operations include receiving data indicative of operator engagement with the at least one presence sensor; determining, using the data, that the power tool is in the engaged state; and controlling operation of one or both of the first motor and the second motor based on the power tool being in the engaged state. In some embodiments, a single motor may drive both the walking element and the working element.

In accordance with another embodiment, a method of operating a power tool is provided. The method includes receiving a motor activation signal, detecting engagement of at least one presence sensor, activating a motor of the power tool based on engagement of the at least one presence sensor, and deactivating the motor based on disengagement of the at least one presence sensor.

In accordance with yet another embodiment, a control assembly for a power tool is provided. The control assembly includes at least one presence sensor and a controller communicatively coupled to the at least one presence sensor. The controller is configured to perform a plurality of operations including receiving data indicative of operator engagement with the at least one presence sensor; determining, using the data, that the power tool is in an engaged state based on user engagement with the at least one presence sensor or in a disengaged state based on user disengagement with the at least one presence sensor; and controlling operation of a motor operably coupled to the controller based on the power tool being in the engaged state.

In accordance with an embodiment, a power tool is provided. The power tool includes a frame, a seat coupled to the frame for receiving an operator of the power tool, a housing coupled to the frame and including a first motor and a second motor, a cutting deck coupled to the frame and including a cutting implement, a walking element coupled to the frame and operably coupled to the first motor, at least one handle configured to receive a control input from the operator of the power tool, at least one sensor operable to detect an engaged state in which an operator engages the at least one sensor and a disengaged state in which the operator disengages the at least one sensor, and a controller operably coupled to the at least one sensor and the motor. The cutting implement is operably coupled to the second motor. The power tool also includes one or more removable power sources, such as batteries, for providing power to the power tool, such as to the first motor and the second motor, in addition to various other power tools, such as chainsaws, lawnmowers, string trimmers, drills, saws, or the like. The controller is configured to perform a plurality of operations. The plurality of operations include receiving data indicative of operator engagement with the at least one sensor; determining, using the data, that the power tool is in the engaged state; and controlling operation of the motor based on the power tool being in the engaged state.

In accordance with another embodiment, a method of operating a power tool is provided. The method includes receiving a motor activation signal, detecting engagement of at least one presence sensor, activating a motor of the power tool based on engagement of the at least one presence sensor, and deactivating the motor based on disengagement of the at least one presence sensor.

In accordance with yet another emobdiment, a control assembly for a power tool is provided. The control assembly includes at least one presence sensor and a controller communicatively coupled to the at least one presence sensor. The controller is configured to perform a plurality of operations including receiving data indicative of operator engagement with the at least one presence sensor; determining, using the data, that the power tool is in an engaged state based on user engagement with the at least one presence sensor or in a disengaged state based on user disengagement with the at least one presence sensor; and controlling operation of a motor operably coupled to the controller based on the power tool being in the engaged state.

These and other features, aspects and advantages of the present disclosure will become better understood with reference to the following description and appended claims. The accompanying drawings, which are incorporated in and constitute a part of this specification, illustrate embodiments of the technology and, together with the description, serve to explain the principles of the technology.

These and other features, aspects and advantages of the present disclosure will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present application, including the best mode of making and using the present systems and methods, directed to one of ordinary skill in the art, is set forth in the specification, which makes reference to the appended figures, in which:
FIG. 1 is a perspective view of a log splitter in accordance with embodiments of the present disclosure;
FIG. 2A is a schematic view of a control assembly of the log splitter of FIG. 1 in accordance with embodiments of the present disclosure;
FIG. 2B is a schematic view of the control assembly of the log splitter of FIG. 2A in an engaged state in accordance with embodiments of the present disclosure;
FIG. 3A is a perspective view of a power tool with a control assembly in accordance with embodiments of the present disclosure;
FIG. 3B is a perspective view of the power tool with the control assembly of FIG. 3A in an engaged state in accordance with embodiments of the present disclosure;
FIG. 4 is a perspective view of a chainsaw in accordance with embodiments of the present disclosure;
FIG. 5A is a schematic view of a control assembly of the chain saw of FIG. 4 in accordance with embodiments of the present disclosure;
FIG. 5B is a schematic view of the control assembly of the chain saw of FIG. 5A in an engaged state in accordance with embodiments of the present disclosure;
FIG. 6 is a perspective view of a hedge trimmer in accordance with embodiments of the present disclosure;
FIG. 7A is a schematic view of a control assembly of the hedge trimmer of FIG. 6 in accordance with embodiments of the present disclosure;
FIG. 7B is a schematic view of the control assembly of the hedge trimmer of FIG. 7A in an engaged state in accordance with embodiments of the present disclosure;
FIG. 8A is a perspective view of a power tool with touch sensitive controls in accordance with embodiments of the present disclosure;
FIG. 8B is a perspective view of a power tool with touch sensitive controls in accordance with embodiments of the present disclosure;
FIG. 9A is a perspective view of a tiller in accordance with embodiments of the present disclosure;
FIG. 9B is a schematic view of a control assembly of the tiller of FIG. 9A in a disengaged state in accordance with embodiments of the present disclosure;
FIG. 9C is a schematic view of the control assembly of the tiller of FIG. 9A in an engaged state in accordance with embodiments of the present disclosure;
FIG. 9D is a detailed view of a handle of the tiller of FIG. 9A in accordance with embodiments of the present disclosure;
FIG. 10A is a perspective view of a lawnmower including a control assembly in a disengaged state in accordance with embodiments of the present disclosure;
FIG. 10B is a perspective view of the lawnmower including the control assembly of FIG. 10A in an engaged state in accordance with embodiments of the present disclosure;
FIG. 11A is a perspective view of a snow blower including a control assembly in a disengaged state in accordance with embodiments of the present disclosure;
FIG. 11B is a perspective view of the snow blower including the control assembly of FIG. 11A in an engaged state in accordance with embodiments of the present disclosure;
FIG. 11C is a detailed view of a handle of the snowblower of FIG. 11A in accordance with embodiments of the present disclosure;
FIG. 12 is a perspective view of a lawnmower in accordance with embodiments of the present disclosure;
FIG. 13A is schematic view of a control assembly of the lawnmower of FIG. 12 in a disengaged state in accordance with embodiments of the present disclosure;
FIG. 13B is schematic view of the control assembly of the lawnmower of FIG. 12 in an engaged state in accordance with embodiments of the present disclosure;
FIG. 14 is a schematic diagram of a power tool in accordance with embodiments of the present disclosure;
FIG. 15 is a flow chart of a method of operating a power tool in accordance with embodiments of the present disclosure;
FIG. 16 is a flow chart of a method of operating a power tool in accordance with embodiments of the present disclosure;
FIG. 17 is a flow chart of a method of controlling a lawnmower in accordance with embodiments of the present disclosure; and
FIG. 18 is a flow chart of a method of controlling a lawnmower in accordance with embodiments of the present disclosure.

### DETAILED DESCRIPTION

Reference now will be made in detail to embodiments of the present disclosure, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, power tools described herein may advantageously provide one or more inputs (e.g., safety inputs or secondary inputs) that do not require a mechanical or movable assembly. For example, mechanical inputs that ensure the power tool is in a secure state for operation may be eliminated without eliminating the safety features such inputs provide. For example, the power tools described herein detect whether a user has properly engaged the power tool to enable operation. Moreover, operational inputs for the power tools described herein may prevent water and dirt from entering and damaging the power tools, for example, via the mechanical inputs. Also, mechanical actuators can wear out over time and break from use.

Additionally, a control assembly for a power tool is described herein that advantageously enables operation of the power tool without additional safety or secondary inputs. The control assembly includes one or more sensors operably coupled to a controller. For example, the one or more sensors may include a first presence sensor and a second presence sensor. The controller receives data from the first presence sensor and the second presence sensor indicative of operator engagement with the first presence sensor and the second presence sensor, respectively. Based on the first data and the second data, the controller determines whether the power tool is in an engaged state based on operator engagement with both the first presence sensor and the second presence sensor or in a disengaged state based on operator disengagement with one or both of the first presence sensor and the second presence sensor. Additionally, the controller controls operation of a motor of the power tool based on the power tool being in the engaged state or the disengaged state. For example, the controller may activate the motor when the power tool is in the engaged state and deactivate the motor based on the power tool being in the disengaged state. Moreover, the motor may be selectively activated by the operator when in the engaged state.

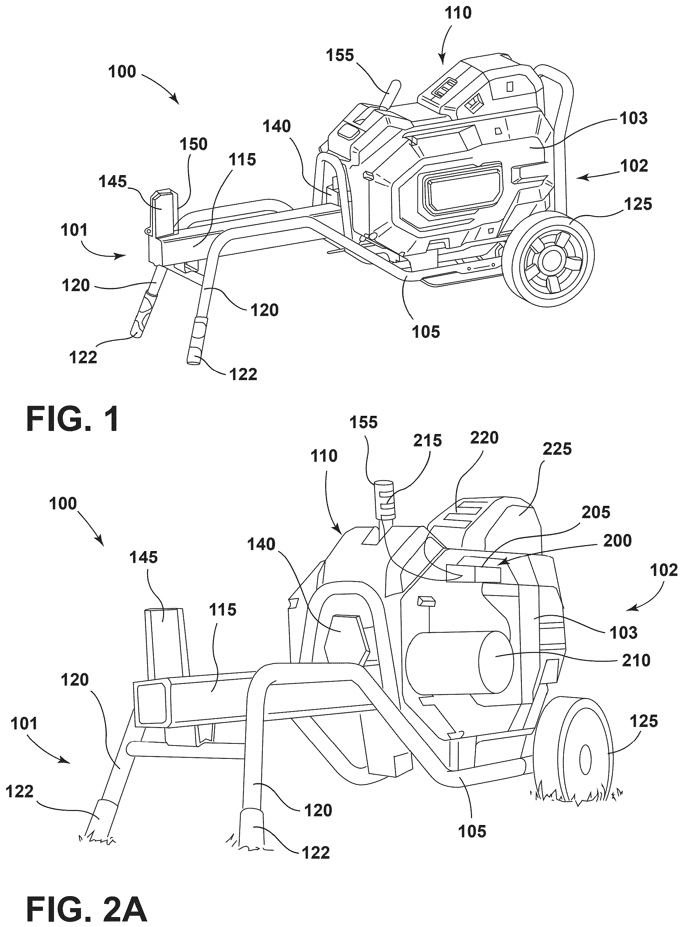

Referring now to the drawings, FIG. 1 illustrates a perspective view of a log splitter 100 in accordance with embodiments of the present disclosure. The log splitter 100 includes a housing 110 including a base 105 and a removable shell 103. The base 105 includes a support arm 115. The support arm 115 extends between a first end 101 and a second end 102 of the log splitter 100. The support arm 115 may also extend at least partially within the removable shell 103.

The base 105 includes one or more support legs 120 adjacent the first end 101 of the log splitter 100 and one or more wheels 125 adjacent the second end 102 of the log splitter 100. The one or more support legs 120 are configured to support at least a portion of the support arm 115. Ends of the one or more support legs 120 adjacent the first end 101 of the log splitter may include one or more handles 122 for an operator, or operators, to grip to lift and move the log splitter using the one or more wheels 125.

In at least one example embodiment, the log splitter 100 includes at least one power source and a motive device, such as at least one motor, disposed in the housing 110. For example, the power source may be disposed within the removable shell 103 of the housing 110. The power source is electrically coupled to the motive device and configured to supply power to the motive device. Moreover, the power source may be removeable, rechargeable, and replaceable within the housing 110. In at least one example embodiment, the power source includes at least one battery. The at least one battery is removably couplable to the housing 110 for supplying power to the motive device of the log splitter 100. The at least one battery is also removably couplable to other power tools for supplying power to such other power tools. Accordingly, the at least one battery is interchangeable among power tools.

In other example embodiments, the power source may include a permanent battery within the housing 110 that is not removable. In still other example embodiments, the log splitter 100 may include a power cord for plugging the log splitter 100 into an external power source. In still other example embodiments, the log splitter 100 may include one or more removable batteries and a power cord for plugging the log splitter into an external power source. In other example embodiments, the power source may be an engine.

In at least one example embodiment, the log splitter 100 includes a rack 140 at least partially disposed in the housing 110. The rack 140 is also disposed at least partially on the support arm 115. For example, the rack 140 is configured to extend from the housing 110 and move along the support arm 115 in a forward direction from the second end 102 towards the first end 101 and a reverse direction from the first end 101 towards the second end. The log splitter 100 also includes an actuator, such as a handle 155 extending from the housing 110. The handle 155 is communicatively coupled with a controller for controlling the motive device and the rack 140, as will be described in greater detail below with respect to FIGS. 2A-2B.

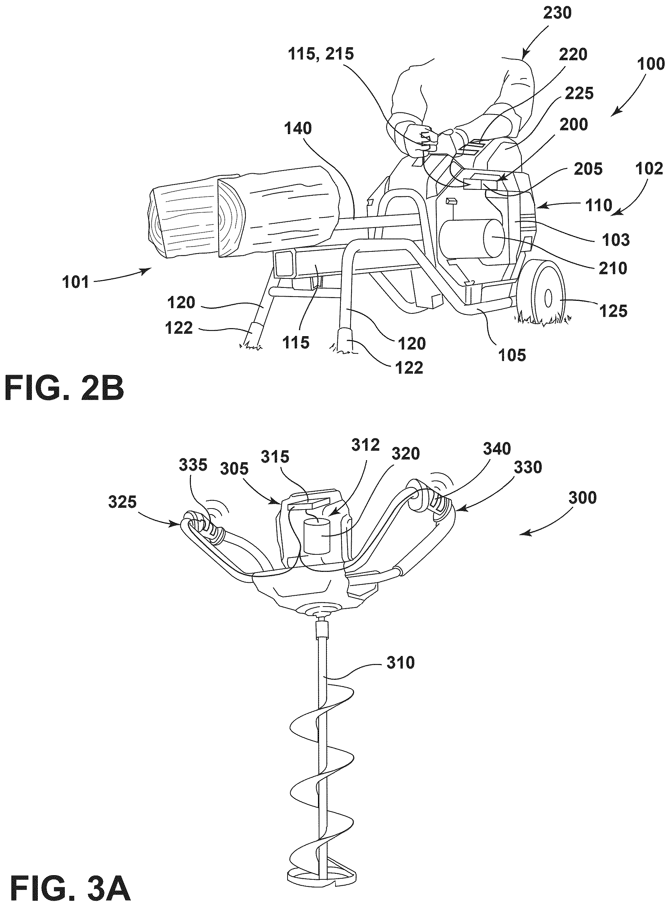

In at least one example embodiment, the log splitter 100 includes a wedge 145 adjacent the first end 101. The wedge 145 may extend perpendicularly from the support arm 115 adjacent the first end 101 of the log splitter 100. The wedge 145 may include any suitable configuration for splitting a log (not shown) into two or more pieces when pushed against and past the wedge 145. For example, as the rack 140 moves along the support arm 115 in the forward direction from a starting position adjacent the second end 102 towards the first end 101, such that the rack 140 reaches an extended position, the log is pushed against the wedge 145 and the tip 150 and the log is split into multiple pieces, as shown in FIG. 2B. In some example embodiments, the wedge 145 includes a tip 150 facing the second end 102 of the log splitter 100. The tip 150 may include a sharpened or angled edge in a vertical orientation, may comprise multiple edges such as in a cross configuration, or may comprise any other suitable design for splitting a log into multiple pieces. In at least one example embodiment, the wedge 145, the tip 150, or both the wedge 145 and the tip 150 may be removeable and replaceable. For example, the wedge 145, the tip 150, or both the wedge 145 and the tip 150 may be removed and replaced with another of a same or different design.

FIG. 2A illustrates a schematic view of a control assembly 200 of the log splitter 100 of FIG. 1 in accordance with embodiments of the present disclosure. FIG. 2B illustrates a schematic view of the control assembly 200 of the log splitter 100 of FIG. 2B in an engaged state in accordance with embodiments of the present disclosure.

The control assembly 200 is disposed in the housing 110 of the log splitter 100. The control assembly 200 includes a controller 205 communicatively coupled to at least one motor, such as a motor 210. The motor 210 is operably coupled to the rack 140 such that the controller 205 controls operation of the rack 140 via the motor 210. The controller 205 is also communicatively coupled to a first presence sensor 215 disposed in the handle 155 and a second presence sensor 220 disposed in a portion of the housing 110. More specifically, the second presence sensor 220 is disposed in a hand or arm rest 225 coupled to and extending from the housing 110. The first presence sensor 215 and the second presence sensor 220 may each include a contact sensor or touch pad. Additionally, the first presence sensor 215 and the second presence sensor 220 may each include a capacitance sensor or impendence sensor. Additionally, one or both of the first presence sensor 215 and the second presence sensor 220 may be configured or operable to detect variable (e.g., non-binary) capacitance level (e.g., directly or via a coupled controller), such that variations in grip pressure may be detected. Moreover, one or both of the first presence sensor 215 and the second presence sensor 220 may be configured or operable to detect proximity of the operator to one or both of the first presence sensor 215 and the second presence sensor 220. In at least one example embodiment, the first presence sensor 215 and the second presence sensor 220 are communicatively coupled to the controller 205 via a wired connection. In other example embodiments, the first presence sensor 215 and the second presence sensor 220 may be communicatively coupled to the controller 205 via a wireless connection.

FIG. 2A illustrates a disengaged state of the log splitter 100 and FIG. 2B illustrates an engaged state of the log splitter 100. In the engaged state, one or both of the first presence sensor 215 and the second presence sensor 220 are engaged by an operator 230 in order to activate the motor 210 and operate the log splitter 100. Accordingly, in some embodiments, only a single presence sensor, such as the first presence sensor 215 or the second presence sensor 220, needs to be engaged by the operator 230 to activate the motor 210. In some embodiments, more than one presence sensor, such as both presence sensors 215 and 220 need to be engaged by the operator 230 to activate the motor 210. In some embodiments, once activated, , as long as one of the first presence sensor 215 or the second presence sensor 220 remains engaged by the operator 230, the motor 210 will remain activated. In some embodiments, once activated, more than one presence sensor, such as both presence sensors 215 and 220 must remain engaged by the operator 230, or the motor 210 will become inactive.

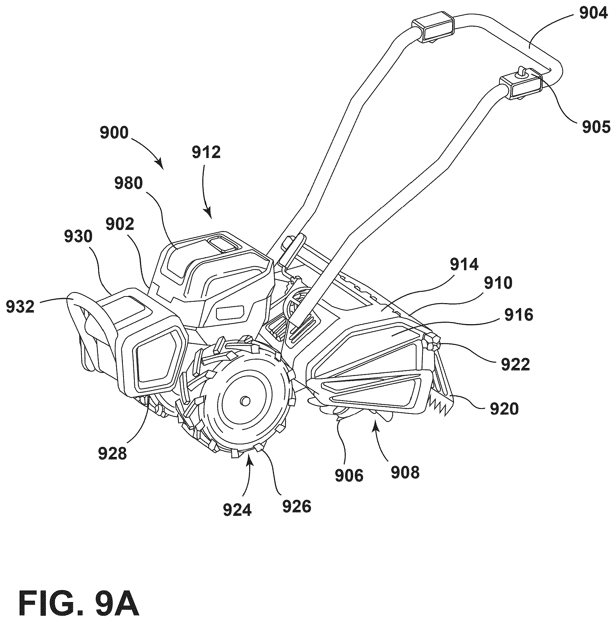

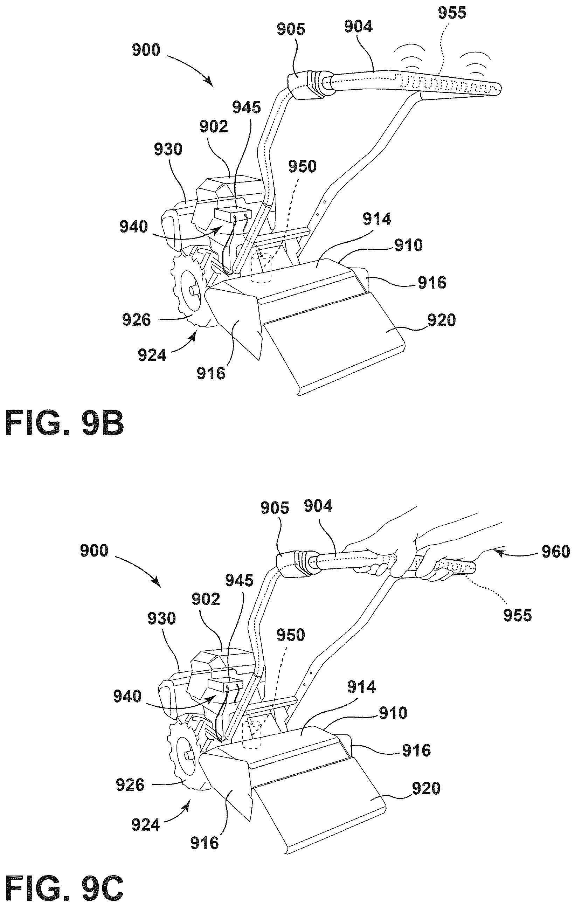

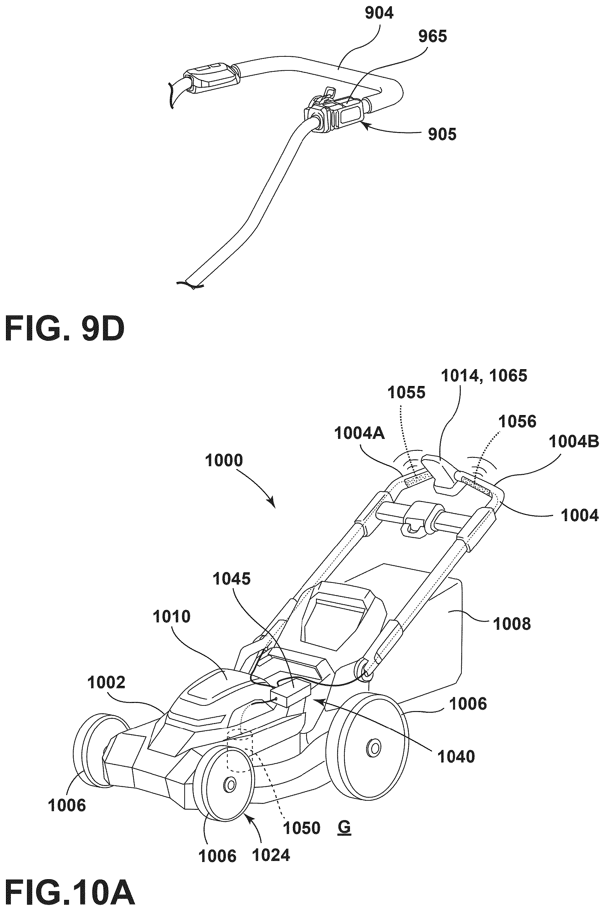

As shown in FIG. 2B, the operator 230 of the log splitter 100 grips the handle 155, engaging the first presence sensor 215, and contacts the arm rest 225, engaging the second presence sensor 220. More specifically, the operator 230 grips the handle 155 with one or both hands to engage the first presence sensor 215 and rests one or both forearms on the arm rest 225 to engage the second presence sensor 220. The controller 205 receives data from both the first presence sensor 215 and the second presence sensor 220 to determine that the log splitter is in the engaged state and controls operation of the motor 210 based on the log splitter 100 being in the engaged state, as will be discussed in greater detail with respect to FIG. 9. Moreover, in the engaged state shown in FIG. 2B, the handle 155 is moveable from a first position to a second position for activating the motor 210 and moving the rack 140 for splitting the log. Moving the handle to the second position may include moving the handle 155 towards the first end 101 and moving the handle to the first position may include moving the handle 155 towards the second end 102. In the disengaged state shown in FIG. 2A, the handle 155 may be prevented from moving and/or the controller 205 prevents operation of the motor 210.

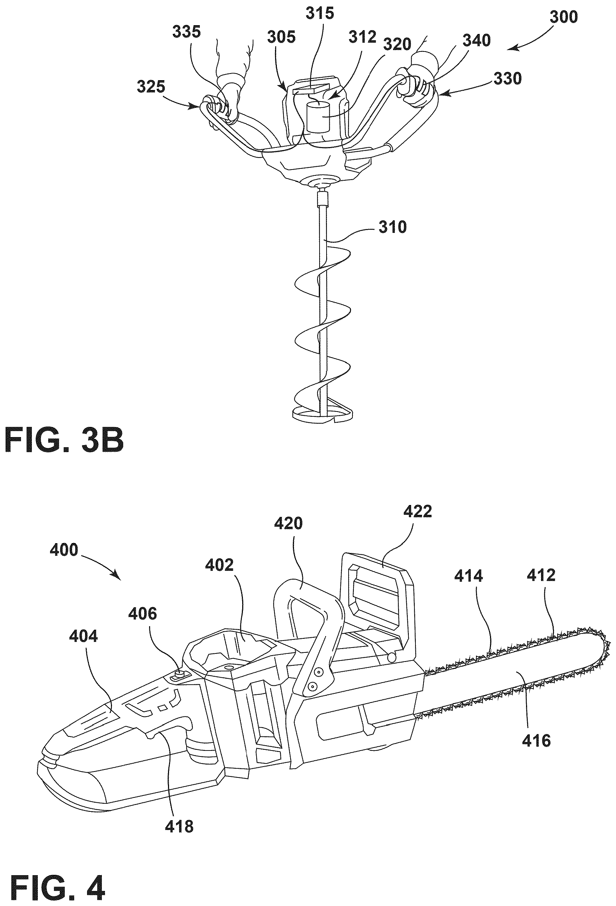

FIG. 3A illustrates a perspective view of a power tool 300 with a control assembly 312 in accordance with embodiments of the present disclosure. FIG. 3B illustrates a perspective view of the power tool 300 with the control assembly 312 of FIG. 3A in an engaged state in accordance with embodiments of the present disclosure. More specifically, the power tool 300 depicted in FIGS. 3A-3B is an earth auger. Additionally, the control assembly 312 may be similar or analogous to the control assembly 200 discussed with respect to FIGS. 2A-2B.

The power tool 300 includes a housing 305 and a work element 310 coupled to and extending from the housing 305. In the example depicted in FIGS. 3A-3B, the work element 310 is an auger. Additionally, as shown in FIGS. 3A-3B, the power tool 300 includes a first handle 325 and a second handle 330 extending from opposing sides of the housing 305.

A control assembly 312 is disposed in the housing 305. The control assembly 312 includes a controller 315 communicatively coupled to a motor 320. The motor 320 is operably coupled to the work element 310 such that the controller 315 controls operation of the work element 310 via the motor 320. The housing 305 may also include a power source (not shown) for supplying power to the motor 320. In at least one example embodiment, the power source may include one or more rechargeable batteries removably couplable to the housing 305. The one or more rechargeable batteries are removably couplable to the housing 305 for supplying power to the motor 320. The one or more rechargeable batteries are also removably couplable to other power tools for supplying power to such other power tools. Accordingly, the one or more rechargeable batteries are interchangeable among power tools.

Additionally, the controller 315 is communicatively coupled to a first presence sensor 335 disposed in a grip of the first handle 325 and a second presence sensor 340 disposed in a grip of the second handle 330. The first presence sensor 335 and the second presence sensor 340 may be similar or analogous to the first presence sensor 215 and the second presence sensor 220 discussed with respect to FIGS. 2A-2B. For example, the first presence sensor 335 and the second presence sensor 340 may include, a contact sensor, a touch pad, a capacitance sensor, or impendence sensor. Additionally, one or both of the first presence sensor 335 and the second presence sensor 340 may be configured to detect variable (e.g., non-binary) capacitance level, such that variations in grip pressure may be detected. Moreover, one or both of the first presence sensor 335 and the second presence sensor 340 may be configured or operable to detect proximity of the operator to one or both of the first presence sensor 335 and the second presence sensor 340. In at least one example embodiment, the first presence sensor 335 and the second presence sensor 340 are communicatively coupled to the controller 315 via a wired connection. In other example embodiments, the first presence sensor 335 and the second presence sensor 340 may be communicatively coupled to the controller 315 via a wireless connection.

FIG. 3A illustrates a disengaged state of the power tool 300 and FIG. 3B illustrates an engaged state of the power tool 300. In the engaged state, one or both of the first presence sensor 335 and the second presence sensor 340 are engaged by an operator in order to activate the motor 320 and operate the power tool 300. Accordingly, in some embodiments, only a single presence sensor, such as the first presence sensor 335 or the second presence sensor 340, needs to be engaged by the operator to activate the motor 320. In some embodiments, more than one presence sensor, such as both presence sensors 335 and 340, need to be engaged by the operator to activate the motor 320. In some embodiment, once activated, as long as one of the first presence sensor 335 or the second presence sensor 340 remains engaged by the operator, the motor 320 will remain activated. In some embodiments, once activated, more than one presence sensor, such as both presence sensors 335 and 340, must remain engaged by the operator, or the motor 320 will become inactive.

The controller 315 receives data from the first presence sensor 335 and the second presence sensor 340 to determine whether the power tool 300 is in the engaged state or the disengaged state. In the engaged state shown in FIG. 3B, the operator of the power tool 300 grips both the first handle 325 and the second handle 330, engaging both the first presence sensor 335 and the second presence sensor 340. In the engaged state, the controller 315 activates the motor 320 for controlling operation of the work element 310. In at least one example embodiment, the controller 315 automatically activates the motor 320 upon the operator engaging the first presence sensor 335 of the first handle 325 and the second presence sensor 340 of the second handle 330. Additionally, or alternatively, the controller 315 activates the motor 320 in response to the operator engaging the first presence sensor 335 of the first handle 325 and the second presence sensor 340 of the second handle 330 and the operator engaging an actuator communicatively coupled to the motor 320. For example, the actuator (e.g., a switch or a button) may be coupled to one or both of the first handle 325 and the second handle 330 such that the operator can easily engage the actuator while also engaging first presence sensor 335 and second presence sensor 340. As another example, the actuator may be coupled to another portion of the tool such that it may be switched on or off and remain in the on or off state without constant contact, such that a user may turn the actuator to the on position and then engage both the first handle 325 and second handle 330 to engage the motor but where engaging the first handle 325 and the second handle 330 will not engage the motor when the actuator is turned to the off position.

In the disengaged state, such as shown in FIG. 3A, the controller 315 deactivates or prevents activation of the motor 320. The disengaged state occurs when the operator releases one or both of the first presence sensor 335 of the first handle 325 and the second presence sensor 340 of the second handle 330 (or when the actuator is turned to the off position in an embodiment with such an actuator).

FIG. 4 illustrates a perspective view of a chainsaw 400 in accordance with embodiments of the present disclosure. The chainsaw 400 includes a housing 402 defining a handle 404. The handle 404 may be unitary with the housing 402. The handle 404 extends from a rear end of the chainsaw 400 and provides a gripping surface for the operator to hold the chainsaw 400 with an overhand or underhand grip.

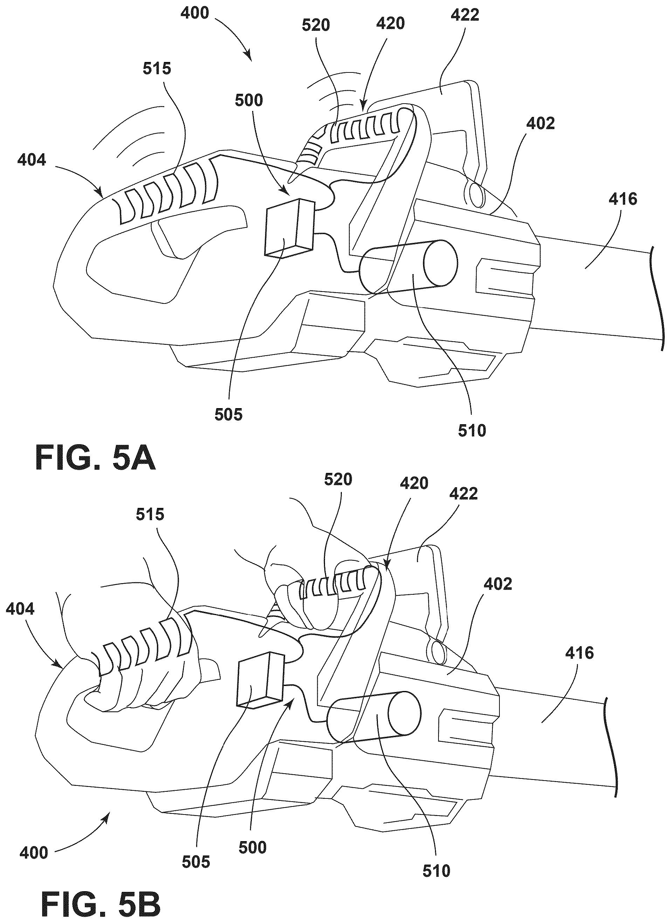

The chainsaw 400 includes one or more power-controlling features 406 that control an operational aspect of the chainsaw 400. For example, the one or more power-controlling features 406 can include an ON/OFF button that controls whether power is supplied to the chainsaw 400 when a control feature 408 is engaged. The control feature 408 can also control the relative speed of a motor (shown in FIGS. 5A-5B) of the chainsaw 400. As the operator increases speed of the motor using the control feature 408, a cutting implement 412 (e.g., a chain) can move at increased speeds along a cutting track 414 formed in a guide bar 416 of the chainsaw 400. The chainsaw 400 may additionally include a secondary handle 420 and one or more guards 422 configured to brake the chain and/or protect the operator from flying debris, wood chips, and the like which may be scattered, for example, by the cutting implement 412 during operation of the chainsaw 400.

The chainsaw 400 includes at least one power source (not illustrated) electrically coupled to the motor and configured to supply power to the motor. The power source may be rechargeable and removably couplable to the housing 402. In at least one example embodiment, the power source includes at least one battery. Moreover, the at least one battery may be removably couplable to other power tools for supplying power to such other power tools. Accordingly, the at least one battery is interchangeable among power tools.

The guide bar 416 can be coupled to the housing 402 in a manner that permits relative movement of the guide bar 416 with respect to the housing 402. The guide bar 416 can lie along a plane and move towards and away from the housing in a direction parallel with the plane. The cutting track 414 is formed in a perimeter of the guide bar 416 and defines a track along which the cutting implement 412 can infinitely move when driven by the motor (shown in FIGS. 5A-5B).

FIG. 5A illustrates a schematic view of a control assembly 500 of the chainsaw 400 of FIG. 4 in accordance with embodiments of the present disclosure. FIG. 5B illustrates a schematic view of the control assembly 500 of the chainsaw 400 of FIG. 5A in an engaged state in accordance with embodiments of the present disclosure. The control assembly 500 may be similar or analogous to the control assembly 200, 312 discussed with respect to FIGS. 2A-2B and 3A-3B.

The control assembly 500 is disposed in the housing 402 of the chainsaw 400. The control assembly 500 includes a controller 505 communicatively coupled to a motor 210. The motor 510 is operably coupled to the cutting implement 412 (FIG. 4) for driving the cutting implement 412 about the cutting track 414 of the guide bar 416, as discussed with respect to FIG. 4. Accordingly, the controller 505 controls operation of the cutting implement 412 via the motor 510.

The controller 505 is also communicatively coupled to a first presence sensor 515 disposed in the handle 404 and a second presence sensor 520 disposed in the secondary handle 420. The first presence sensor 515 and the second presence sensor 520 may be similar or analogous to the first presence sensor 215, 335 and the second presence sensor 220, 340 discussed with respect to FIGS. 2A-2B and 3A-3B. For example, the first presence sensor 515 and the second presence sensor 520 may include a capacitance sensor or impendence sensor. Additionally, one or both of the first presence sensor 515 and the second presence sensor 520 may be configured to detect variable (e.g., non-binary) capacitance level, such that variations in grip pressure may be detected. Moreover, one or both of the first presence sensor 515 and the second presence sensor 520 may be configured or operable to detect proximity of the operator to one or both of the first presence sensor 515 and the second presence sensor 520. In at least one example embodiment, the first presence sensor 515 and the second presence sensor 520 are communicatively coupled to the controller 505 via a wired connection. In other example embodiments, the first presence sensor 515 and the second presence sensor 520 may be communicatively coupled to the controller 505 via a wireless connection.

FIG. 5A illustrates a disengaged state of the chainsaw 400 and FIG. 5B illustrates an engaged state of the chainsaw 400. In the engaged state, one or both of the first presence sensor 515 and the second presence sensor 520 are engaged by an operator in order to activate the motor 510 and operate the chainsaw 400. Accordingly, in some embodiments, only a single presence sensor, such as the first presence sensor 515 or the second presence sensor 520, needs to be engaged by the operator to activate the motor 510. In some embodiments, more than one presence sensor, such as both presence sensors 515 and 520 need to be engaged by the operator to activate the motor 510. In some embodiments, once activated, as long as one of the first presence sensor 515 or the second presence sensor 520 remains engaged by the operator, the motor 510 will remain activated. In some embodiments, once activated, more than one presence sensor, such as both presence sensors 515 and 520 must remain engaged by the operator, or the motor 510 will become inactive.

The controller 505 receives data from the first presence sensor 515 and the second presence sensor 520 to determine whether the chainsaw 400 is in the engaged state or the disengaged state. In the engaged state shown in FIG. 5B, an operator of the chainsaw 400 grips the handle 404 and the secondary handle 420 such that the first presence sensor 515 and the second presence sensor 520 are engaged. Accordingly, in the engaged state, the controller 505 activates the motor 510 for controlling operation of the cutting implement 412. Additionally, or alternatively, the controller 505 activates the motor 510 for controlling operation of the cutting implement when in the engaged state and when an input, such as the control feature 408, is also engaged by the operator. In the disengaged state, such shown in FIG. 5A, the controller 505 deactivates or prevents operation of the motor 510. The disengaged state occurs when the operator releases one or both of the first presence sensor 515 of the handle 404 and the second presence sensor 520 of the secondary handle 420.

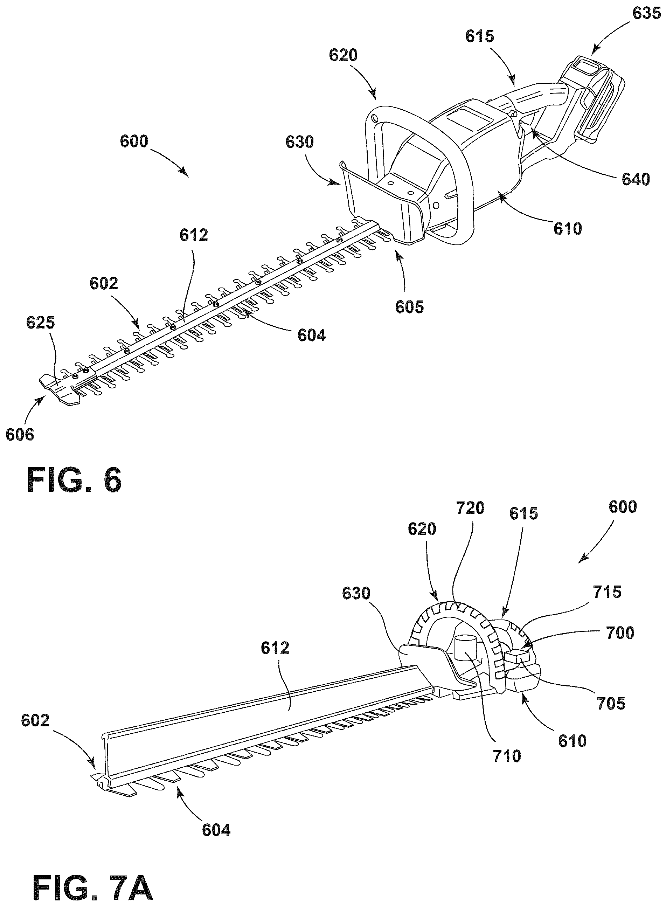

FIG. 6 illustrates a perspective view of a hedge trimmer 600 in accordance with embodiments of the present disclosure. The hedge trimmer 600 generally includes at least one reciprocating cutting implement. For example, the hedge trimmer 600 includes a first blade 602 and a second blade 604 extending from a first end 605 to a second end 606 opposite the first end 605. The first blade 602 and the second blade 604 include "teeth" which, when the implements are reciprocated, cause the blades to cut into material, such as branches of hedges. In other example embodiments, only one of the first blade 602 and the second blade 604 are configured to reciprocate. For example, one of the first blade 602 and the second blade 604 may remain stationary while the other of the first blade 602 and the second blade 604 reciprocates to cause the blades to cut into the material.

The hedge trimmer 600 further includes a housing 610. The first blade 602 and the second blade 604 may extend from the housing 610. Moreover, the first blade 602 and the second blade 604 of the hedge trimmer 600 be coupled to a spine 612 extending from the housing 610 for supporting the first blade 602 and the second blade 604. The hedge trimmer 600 also includes a first handle 615 and a second handle 620. As shown in FIG. 6, the first handle 615 extends from a rear end of the housing 610. The hedge trimmer 600 may further include a blade tip guard 625. The blade tip guard 625 may be coupled to a portion of the spine 612 adjacent the second end 606 and configured to prevent the blades located furthest from the housing 610 from contact with objects (e.g., fences, siding, etc.). The hedge trimmer 600 may further include a blade guard 630. Blade guard 630 may be configured to stop flying debris from hitting the operator.

Additionally, the hedge trimmer 600 includes a motive device (shown in FIGS. 7A-7B) such as an electric motor or gas powered engine, which drives a crankshaft (not shown). The crankshaft may be engaged with the first blade 602 and the second blade 604 such that rotation of the crankshaft causes the first blade 602 and the second blade 604 to reciprocate. The motive device may be powered, for example, by a rechargeable energy source such as a battery 635. The battery 635 may include one or more batteries that removably couplable to the housing 610 for supplying power to the motive device of the hedge trimmer 600. The one or more batteries are also removably couplable to other power tools for supplying power to such other power tools. Accordingly, the one or more batteries are interchangeable among power tools. In other example embodiments, the motive device may be powered by a fuel source such as gasoline, or the like.

In the example embodiment depicted, the hedge trimmer 600 includes an actuator 640. The actuator 640 is disposed proximate to the first handle 615. When depressed, the actuator 640 may engage the motive device to cause the first blade 602 and the second blade 604 to move. As the actuator 640 is depressed farther, a speed of the motive device can increase from zero speed to a maximum speed. In this regard, the actuator 640 may variably affect the speed of the motive device between a stopped speed, which occurs when the actuator 640 is not depressed, and a maximum speed, which occurs when the actuator 640 is fully depressed.

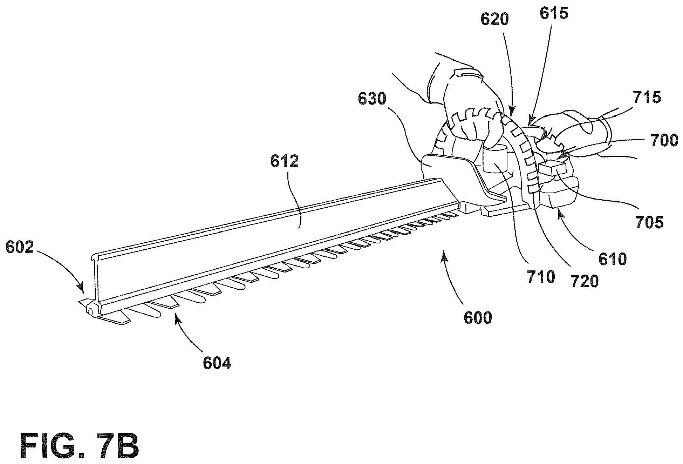

FIG. 7A illustrates a schematic view of a control assembly 700 of the hedge trimmer 600 of FIG. 6 in accordance with embodiments of the present disclosure. FIG. 7B is a schematic view of the control assembly 700 of the hedge trimmer 600 of FIG. 7A in an engaged state in accordance with embodiments of the present disclosure. The control assembly 700 may be similar or analogous to the control assembly 1300, 312, 500 discussed with respect to FIGS. 2A-2B, 3A-3B, and 5A-5B.

The control assembly 700 is disposed in the housing 610 of the hedge trimmer 600. The control assembly 700 includes a controller 705 communicatively coupled to a motor 710. The motor 710 is operably coupled to the crankshaft (not shown) for controlling and reciprocating one or both of the first blade 602 and the second blade 604, as discussed with respect to FIG. 6. Accordingly, the controller 705 controls reciprocation of the first blade 602 and the second blade 604 via the motor 710.

The controller 705 is also communicatively coupled to a first presence sensor 715 disposed in the first handle 615 and a second presence sensor 720 disposed in the second handle 620. The first presence sensor 715 and the second presence sensor 720 may be similar or analogous to the first presence sensor 215, 335, 515 and the second presence sensor 220, 340, 520 discussed with respect to FIGS. 2A-2B, 3A-3B, and 5A-5B. For example, the first presence sensor 715 and the second presence sensor 720 may include a capacitance sensor or impendence sensor. Additionally, one or both of the first presence sensor 715 and the second presence sensor 720 may be configured to detect variable (e.g., non-binary) capacitance level, such that variations in grip pressure may be detected. Moreover, one or both of the first presence sensor 715 and the second presence sensor 720 may be configured or operable to detect proximity of the operator to one or both of the first presence sensor 715 and the second presence sensor 720. In at least one example embodiment, the first presence sensor 715 and the second presence sensor 720 are communicatively coupled to the controller 705 via a wired connection. In other example embodiments, the first presence sensor 715 and the second presence sensor 720 may be communicatively coupled to the controller 705 via a wireless connection.

FIG. 7A illustrates a disengaged state of the hedge trimmer 600 and FIG. 7B illustrates an engaged state of the hedge trimmer 600. In the engaged state, one or both of the first presence sensor 715 and the second presence sensor 720 are engaged by an operator in order to activate the motor 710 and operate the hedge trimmer 600. Accordingly, in some embodiments, only a single presence sensor, such as the first presence sensor 715 or the second presence sensor 720, needs to be engaged by the operator to activate the motor 710. In some embodiments, more than one presence sensor, such as both presence sensors 715 and 720 need to be engaged by the operator to activate the motor 710. In some embodiments, once activated, as long as one of the first presence sensor 715 or the second presence sensor 720 remains engaged by the operator, the motor 710 will remain activated. In some embodiments, once activated, more than one presence sensor, such as both presence sensors 715 and 720, must remain engaged by the operator, or the motor 710 will become inactive.

The controller 705 receives data from the first presence sensor 715 and the second presence sensor 720 to determine whether the hedge trimmer 600 is in the engaged state or the disengaged state. In the engaged state shown in FIG. 7B, an operator of the hedge trimmer 600 grips both the first handle 615 and the second handle 620 such that the first presence sensor 715 and the second presence sensor 720 are engaged. In the engaged state, the controller 705 may activate the motor 710 for controlling operation and reciprocation of the first blade 602 and the second blade 604. For example, the controller 705 may activate the motor in response to the operator engaging both the first presence sensor 715 of the first handle 615 and the second presence sensor 720 of the second handle 620, and in response to the operator selectively engaging the actuator 640. In the disengaged state, such as shown in FIG. 7A, the controller 705 deactivates or prevents operation of the motor 710. The disengaged state occurs when the operator releases one or both of the first presence sensor 715 of the first handle 615 and the second presence sensor 720 of the second handle 620.

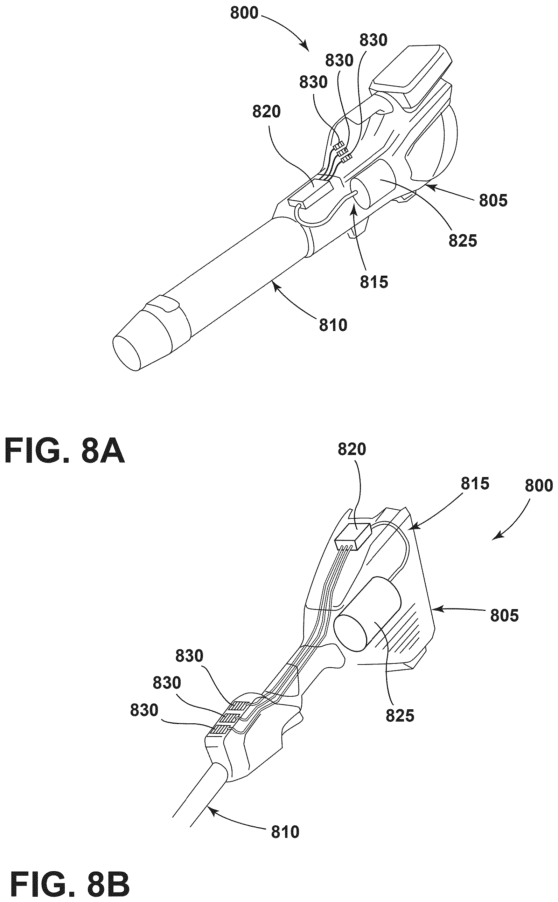

FIGS. 8A and 8B illustrate a perspective view of a power tool 800 in accordance with embodiments of the present disclosure. The power tool 800 includes a housing 805 and a work element 810 extending from the housing 805. In the example depicted in FIG. 8A, the power tool 800 is a blower, and in the example depicted in FIG. 8B, the power tool 800 is a string trimmer. However, it should be understood that the power tool 800 can include any power tool, such as an edger, a hedge trimmer, or a pole saw. Additionally, the power tool 800 can include the log splitter 100 discussed with respect to FIGS. 1A-2B, the power tool 300 discussed with respect to FIGS. 3A-3B, the chainsaw 400 discussed with respect to FIGS. 4-5B, and the hedge trimmer 600 discussed with respect to FIGS. 6-7B.

The power tool 800 includes a control assembly 815 at least partially disposed in the housing 805. The control assembly 815 includes a controller 820 communicatively coupled to a motor 825 and one or more touch sensitive controls 830. The one or more touch sensitive controls 830 may be disposed on the housing 805 and accessible by an operator of the power tool 800. The one or more touch sensitive controls 830 may include one or more capacitance sensors, one or more impedance sensors, or both the one or more capacitance sensors and the one or more impedance sensors.

In at least one example embodiment, the one or more touch sensitive controls 830 control an operational aspect of the power tool 800. For example, the one or more touch sensitive controls 830 may be incorporated into the chainsaw 400 as the one or more power-controlling features 406 discussed with respect to FIG. 4. The one or more touch sensitive controls 830 can include an ON/OFF control for controlling whether power is supplied to the power tool 800 and/or a speed control for controlling a speed of the motor 825. The one or more touch sensitive controls 830 may also respond to a touch or a gesture, such as tapping or sliding, to activate various functions of the power tool 800. Additionally, the one or more touch sensitive controls 830 may be disposed under a cover, such as a sticker, applied to the housing 805 or disposed within the housing 805 for protection from external elements, such as dirt and water.

FIG. 9A illustrates a perspective view of a tiller 900 in accordance with embodiments of the present disclosure. FIG. 9B illustrates a schematic view of a control assembly 940 of the tiller 900 of FIG. 9A in a disengaged state in accordance with embodiments of the present disclosure. FIG. 9C illustrates a schematic view of the control assembly 940 of the tiller 900 of FIG. 9A in an engaged state in accordance with embodiments of the present disclosure. FIG. 9D illustrates a detailed view of a handle 904 of the tiller 900 of FIG. 9A in accordance with embodiments of the present disclosure.

The tiller 900 includes a housing 902, a handle 904 extending rearwardly from the housing 902, a working implement, such as tines 906, disposed within a volume 908 of a tine shield 910, and a battery receiving area 912. During operation of the tiller 900, the tines 906 are rotatable about a rotational axis such that a plurality of cutting surfaces of the tines 906 extend into the ground to break apart the soil. The battery receiving area 912 can be closed using a cover 980. The cover 980 can be connected to the battery receiving area 912, or another portion of the housing 902, to allow the cover 980 to move between an open position and a closed position. For example, the cover 980 may be coupled to the battery receiving area with a hinged connection. With the cover 980 in the open position, one or more energy storage devices, such as one or more batteries, may be accessible. With the cover 980 in the closed position, the one or more energy storage devices may be protected against debris, e.g., during operational use. The one or more energy storage devices are electrically coupled to a motor (shown in FIGS. 9B-9C) of the tiller 900. The one or more energy storage devices are removably couplable to the tiller 900 for supplying power to the tiller 900 as well as various other power tools.

As shown in FIG. 9A, the tines 906 are disposed at a rear end of the housing 902. At least a portion of the tines 906 may be disposed below a portion of the handle 904. During use, the operator may stand behind the tines 906, holding onto the handle 904.

The tine shield 910 may include a cover extending around at least a portion of the tines 906. The tine shield 910 can include, for example, a top cover 914, side panels 916, and a rear shield 920. The tine shield 910, and more particularly, the rear shield 920 can prevent the operator from becoming entangled in the tines 906. The rear shield 920 may also flatten tilled soil into a neat row. The rear shield 920 may be pivotably attached to the tine shield 910 such that the rear shield 920 can deflect during usage to accommodate different underlying ground surfaces and structures while maintaining protection against operator entanglement. The rear shield 920 may be coupled to the tine shield 910 by a connector 922. The connector 922 can be adjustable, allowing the operator to adjust any one or more of pivotable tension (e.g., how easily the rear shield 920 deflects during usage), operating height of the side panels 916 and rear shield 920 (e.g., by moving the connector 922 in a slot), or the like. Moreover, using the connector 922, the operator can remove the rear shield 920 during, e.g., maintenance operations or if the tines 906 become jammed during use. Alternatively, rear shield 920 may be pivotably fixed to the top cover 914 (e.g., via hinge connectors at or near the location of connectors 922) and the height of side panels 916 may be moveable relative to rear shield 920 (e.g., via the adjustable connector 922 moving in a slot).

In some example embodiments, the operator can manually operate the tiller 900, e.g., pushing the tiller 900, using the handle 904. In such embodiments, the tiller 900 may include an interface 905 which permits the operator to selectively permit manual operation. For example, the interface 905 may be disposed on or adjacent to the handle 904 for ease of access by the operator. Additionally, or alternatively, the tiller 900 may be self-powered. The tiller 900 includes a walking element 924 configured to move the tiller 900. As shown in FIG. 9A, the walking element 924 includes one or more wheels, such as a plurality of wheels. The plurality of wheels can include a first wheel 926 and a second wheel 928. In some example embodiments, only one of the first or second wheels 926 or 928 is self-powered. The other of the first or second wheels 926 or 928 can be unpowered. In other example embodiments, both of the first and second wheels 926 and 928 can be self- powered. Moreover, the first and second wheels 926 and 928 can be connected together, e.g., by a drive axle, such that power imparted on either first wheel 926 or second wheel 928, or the drive axle, powers both the first and second wheels 926 and 928.

In at least one example embodiment, the tiller 900 also includes a counterweight 930 that offsets or balances the weight of the tines 906. The counterweight 930 can be coupled with a bulbar 932 that extends from the housing 902 in a direction away from the tines 906. In at least one example embodiment, the counterweight 930 is removable from the bulbar 932. In other example embodiments, the counterweight 930 is fixed to the bulbar 932. As shown in FIG. 9A, the bulbar 932 can form a forwardmost end of the tiller 900. In other example embodiments, the counterweight 930 can form the forwardmost end of the tiller 900. To allow for different load balancing, the counterweight 930 can be adjustable. For example, adjustability of the counterweight 930 may be achieved by moving the counterweight 930 relative to the bulbar 932, changing the weight of the counterweight 930 by adding or subtracting mass therefrom, or the like.

With reference to FIGS. 9B-9C, the control assembly 940 is disposed in the housing 902 of the tiller 900. The control assembly 940 includes a controller 945 communicatively coupled to at least one motor 950. The at least one motor 950 is operably coupled to one or both of the tines 906 and the walking element 924 such that the controller 945 controls operation of the tines 906 and the walking element 924 via the at least one motor 950. For example, the at least one motor includes a first motor coupled to the walking element 924 and a second motor coupled to the tines 906. In some embodiments, the controller 945 is communicatively coupled to at least one sensing area, such as at least one presence sensor 955 disposed in the handle 904.

In at least one example embodiment, the at least one presence sensor 955 includes a capacitance sensor or impendence sensor. Additionally, the at least one presence sensor 955 may be configured or operable to detect variable (e.g., non-binary) capacitance level (e.g., directly or via a coupled controller), such that variations in grip pressure may be detected. In at least one example embodiment, the at least one presence sensor 955 is communicatively coupled to the controller 945 via a wired connection. In other example embodiments, the at least one presence sensor 955 may be communicatively coupled to the controller 945 via a wireless connection.

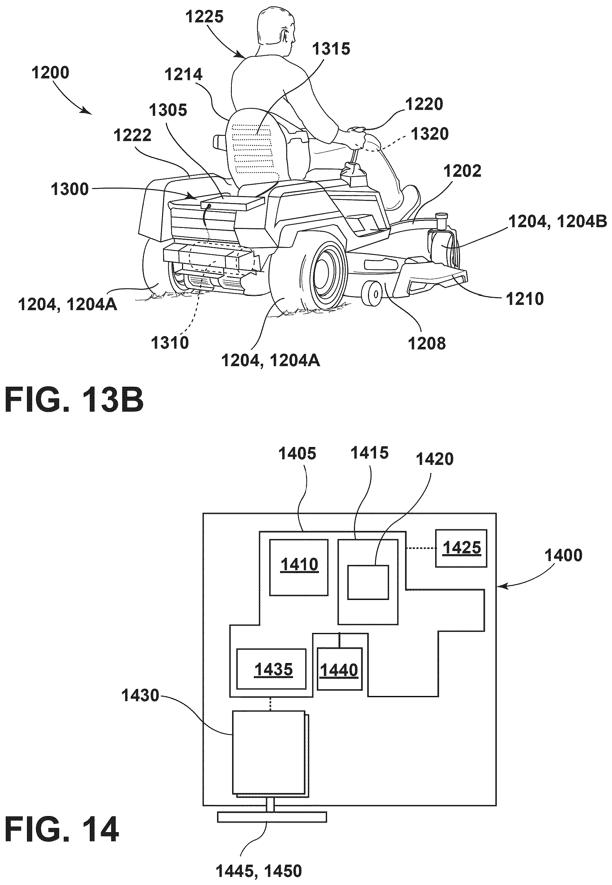

FIG. 9B illustrates a disengaged state of the tiller 900 and FIG. 9C illustrates an engaged state of the tiller 900. As shown in FIG. 9C, an operator 960 of the tiller 900 grips the handle 904, engaging the at least one presence sensor 955. More specifically, the operator 960 grips the handle 904 with one or both hands to engage the at least one presence sensor 955. The controller 945 receives data from the at least one presence sensor 955 to determine whether the tiller 900 is in the engaged state and controls operation of the at least one motor 950 based on the tiller 900 being in the engaged state, as will be discussed in greater detail with respect to FIGS. 14-17.

As shown in FIGS. 9B-9C, the at least one presence sensor 955 is a single presence sensor disposed in a gripping portion of the handle 904. In other example embodiments, the at least one presence sensor 955 may include a first presence sensor disposed at a first gripping portion of the handle 904 and a second presence sensor disposed at a second gripping portion of the handle 904 separate from the first gripping portion such that a hand of the operator 960 engages the first gripping portion and the other hand of the operator 960 engages the second gripping portion.

With reference to FIG. 9D, the control assembly 940 may include one or more touch sensitive controls 965 communicatively coupled to the controller 945. For example, the interface 905 may include the one or more touch sensitive controls 965 for accessibility by the operator 960 of the tiller 900. The one or more touch sensitive controls 965 may include one or more capacitance sensors, one or more impedance sensors, or both the one or more capacitance sensors and the one or more impedance sensors.

In at least one example embodiment, the one or more touch sensitive controls 965 control an operational aspect of the tiller 900. For example, the one or more touch sensitive controls 965 can include an ON/OFF control for controlling whether power is supplied to one or both of the first motor and the second motor of the at least one motor 950, a rotational speed control for one or both of the walking element 924 and the tines 906 via the first motor and the second motor, a rotational direction of one or both of the walking element 924 and the tines 906 via the first motor and the second motor, or a combination thereof. The one or more touch sensitive controls 965 may also respond to a touch or a gesture, such as tapping or sliding, to activate various functions of the tiller 900. Additionally, the one or more touch sensitive controls 965 may be disposed under a cover, such as a sticker, applied to the interface 905 or disposed within the interface 905 for protection from external elements, such as dirt and water.

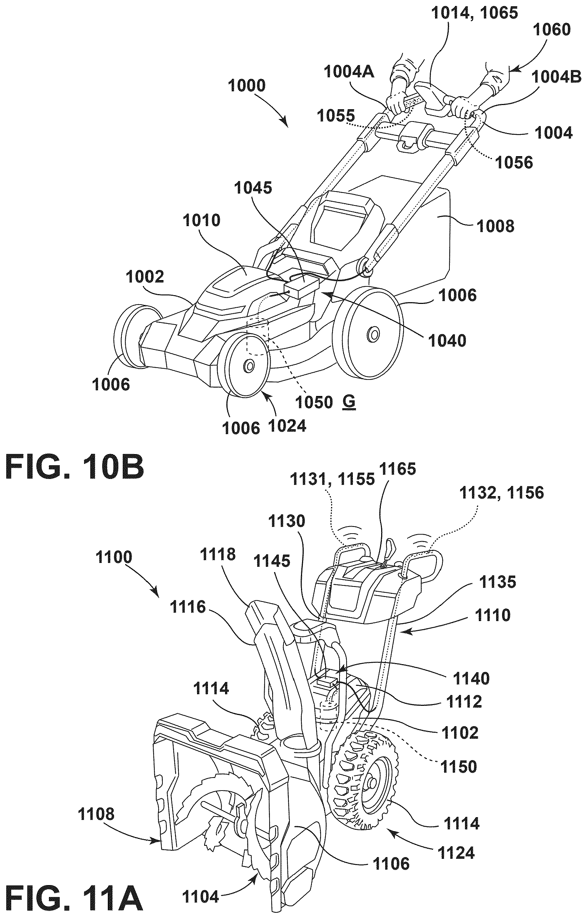

FIG. 10A illustrates a perspective view of a lawnmower 1000 including a control assembly 1040 in a disengaged state in accordance with embodiments of the present disclosure. FIG. 10B illustrates a perspective view of the lawnmower 1000 including the control assembly 1040 of FIG. 10A in an engaged state in accordance with embodiments of the present disclosure. More specifically, the lawnmower 1000 depicted in FIGS. 10A-10B is a walk-behind lawnmower.

The lawnmower 1000 generally includes a housing 1002, a handle 1004 extending from the housing 1002, a walking element 1024 in the form of a plurality of wheels 1006 that support the housing 1002 to permit the lawnmower 1000 to move over an underlying (ground) surface G, a debris container 1008 in the form of a grass clippings bag coupled to the housing 1002 at a location under the handle 1004, a power storage receiving compartment 1010 in the form of a battery compartment which receives one or more batteries (not shown), and an interface 1014 to affect operational control of the lawnmower 1000 by a user. The one or more batteries are removably couplable to the lawnmower 1000 for supplying power to the lawnmower 1000 as well as various other power tools.

The interface 1014 may be positioned at the handle 1004 to allow the user to easily operate a at least one motor 1050, one or more working implements of the lawnmower 1000, or both the at least one motor 1050 and the one or more working implements of the lawnmower 1000.For example, the at least one motor 1050 includes a first motor for operating a walking element 1025 in the form of the plurality of wheels 1006 and a second motor for operating the one or more working implements.

The housing 1002 at least partially surrounds a working implement, such as a cutting blade, driven by the at least one motor 1050. For example, the second motor of the at least one motor 1050 is supported by the housing 1002 (or a framework of the lawnmower 1000) and drives the working implement to perform a working operation. For example, the motor 1050 can include a brushed or brushless direct current (DC) motor with an output shaft operably coupled to one or more blades. Additionally, or alternatively, a gas-powered or internal combustion engine may be provided. The motor 1050 can drive the one or more blades to move such that cutting surface(s) of the one or more blades cut grass and other underlying debris into small pieces which may be optionally collected in the debris container 1008. In some implementations, the height of cut of the blade(s) can be adjusted by the user, e.g., at a height of cut adjustment interface. In this regard, the user can raise and lower the height of cut to achieve a desirable lawn height.

The handle 1004 extends from the housing 1002 in a rearward direction, permitting a user to control (e.g., steer or push) the lawnmower 1000 over the underlying surface G. The handle 1004 may be adjustable, allowing the user to change, for example, a length of the handle 1004, an angular orientation of the handle 1004 with respect to the housing 1002, a state of the handle 1004 (e.g., between an in-use configuration and a stored configuration), or any combination thereof. The handle 1004 can define one or more grips which are engageable by the user to affect control of the handle 1004. The grip(s) can be disposed at an upper part of the handle 1004, such as near the interface 1014. The grips or handle 1004 generally may be unobscured, such that no mechanical bail or dead-man's lever is provided on the grips or handle, notably preventing a user from unintentionally fumbling with or snagging any bail.

The handle 1004 can include, for example, a presence detector which selectively permits the at least one motor 1050 to operate based on user presence (e.g., as will be described in detail below). For example, handle 1004 may include or be provided with one or more sensing areas of presence sensors supported on the handle 1004. As shown in FIGS. 10A-10B, handle 1004 includes a first input pad region 1004A and a second input pad region 1004B. As shown, the first and second input pad regions 1004A, 1005B may be spaced apart from each other (e.g., at opposite grips). For example, the first and second input pad regions 1004A, 1005B may be on opposing sides of the interface 1014.

Referring still to FIGS. 10A-10B, the control assembly 1040 is disposed at least partially in the housing 1002 of the lawnmower 1000. The control assembly 1040 includes a controller 1045 communicatively coupled to the at least one motor 1050. For example, the at least one motor 1050 includes a first motor operably coupled to the walking element 1024 and a second motor operably coupled to the working implement such that the controller 1045 controls operation of the walking element 1024 via the first motor and operation of the working implement via the second motor. The controller 1045 is also communicatively coupled to at least one presence sensor, such as a first presence sensor 1055 disposed in the first input pad region 1004A of the handle 1004 and a second presence sensor 1056 disposed in the second input pad region 1004B of the handle 1004.

In at least one example embodiment, the first presence sensor 1055 and the second presence sensor 1056 include a capacitance sensor or impendence sensor. Additionally, the first presence sensor 1055 and the second presence sensor 1056 may be configured or operable to detect variable (e.g., non-binary) capacitance level (e.g., directly or via a coupled controller), such that variations in grip pressure may be detected. In at least one example embodiment, the first presence sensor 1055 and the second presence sensor 1056 are communicatively coupled to the controller 1045 via a wired connection. In other example embodiments, the first presence sensor 1055 and the second presence sensor 1056 may be communicatively coupled to the controller 1045 via a wireless connection.

FIG. 10A illustrates a disengaged state of the lawnmower 1000 and FIG. 10B illustrates an engaged state of the lawnmower 1000. As shown in FIG. 10B, an operator 1060 of the lawnmower 1000 grips one or both of the first input pad region 1004A and the second input pad region 1004B of the handle 1004, engaging the first presence sensor 1055 and the second presence sensor 1056, respectively. The controller 1045 receives first data from the first presence sensor 1055 and second data from the second presence sensor 1056 to determine whether the lawnmower 1000 is in the engaged state and controls operation of the at least one motor 1050, such as the first motor and the second motor, based on the lawnmower 1000 being in the engaged state, as will be discussed in greater detail with respect to FIGS. 14-17.

The control assembly 1040 may also include one or more touch sensitive controls 1065 communicatively coupled to the controller 1045. For example, the interface 1014 may include the one or more touch sensitive controls 1065 for accessibility by the operator 1060 of the lawnmower 1000. The one or more touch sensitive controls 1065 may include one or more capacitance sensors, one or more impedance sensors, or both the one or more capacitance sensors and the one or more impedance sensors.

In at least one example embodiment, the one or more touch sensitive controls 1065 control an operational aspect of the lawnmower 1000. Example controls include an activation input to start or activate movement one or both of the first motor and the second motor of the at least one motor 1050, a speed-setting interface for adjusting a speed of the wheels 1006 in the case of driven wheel(s) 206, an eco-mode or overdrive/boost selector for adjusting a speed of the working implement, an auxiliary controller which affects a state of an auxiliary component of the lawnmower 1000 (such as one or more headlights, bagger doors, etc.), a rotational direction input for controlling a rotational direction of one or both of the wheels 1006 and the working implement via the first motor and the second motor of the at least one motor 1050, or a combination thereof. The user can engage the one or more touch sensitive controls 1065 based on the working operation being performed and a desired outcome.

Moreover, the one or more touch sensitive controls 1065 may respond to a touch or a gesture, such as tapping or sliding, to activate various functions of the lawnmower 1000. Additionally, the one or more touch sensitive controls 1065 may be disposed under a cover, such as a sticker, applied to the interface 1014 or disposed within the interface 1014 for protection from external elements, such as dirt and water.

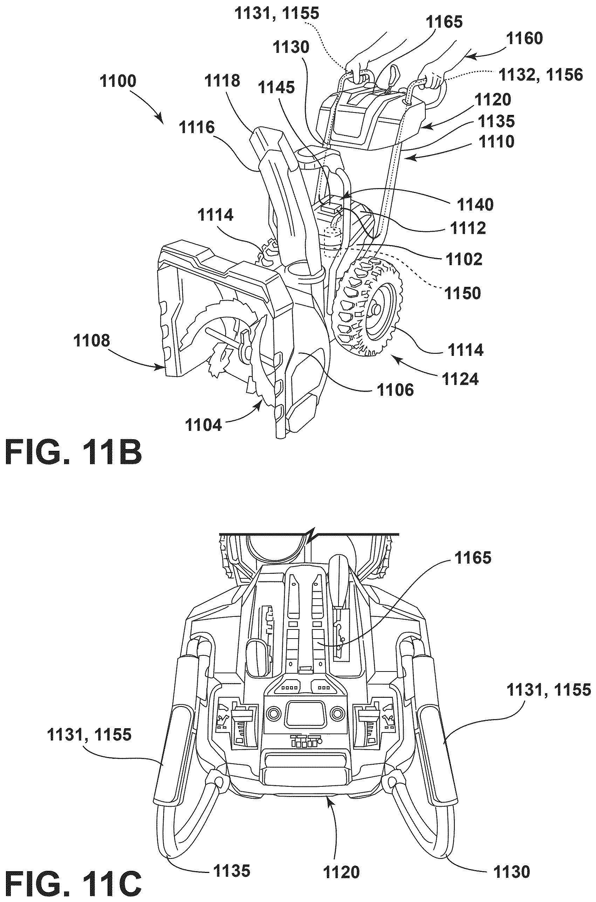

FIG. 11A illustrates a perspective view of a snow blower 1100 including a control assembly 1140 in a disengaged state in accordance with embodiments of the present disclosure. FIG. 11B illustrates a perspective view of the snow blower 1100 including the control assembly 1140 of FIG. 11A in an engaged state in accordance with embodiments of the present disclosure. FIG. 11C illustrates a detailed view of a handle of the snow blower 1100 of FIG. 11A in accordance with embodiments of the present disclosure.

Generally, the snow blower 1100 includes a housing 1102, at least one motor 1150, an auger 1104 disposed within and coupled (e.g., rotatably mounted) to the housing 1102, such as disposed in an auger housing 1106, and a handle assembly 1110 extending from the housing 1102. As illustrated, the handle assembly 1110 can extend from a rear end of the housing 1102 in a generally vertical and rearward direction. A battery compartment 1112 can be coupled to the housing 1102 to receive one or more batteries (not shown) which can provide power to the at least one motor 1050 (e.g., one or more electric motors). The one or more batteries are removably couplable to the snow blower 1100 for supplying power to the snow blower 1100 as well as various other power tools. In other example embodiments, the at least one motor 1050 can be powered by an AC connection. In still other example embodiments, the at least one motor 1050 can include an engine powered by fuel. In such example embodiments, the battery compartment 1112 can be replaced or supplemented with a fuel storage tank (not illustrated) which stores fuel for powering the engine.

The snow blower 1100 is supported by a walking element 1124, e.g., a plurality of wheels 1114. In at least one example embodiment, the plurality of wheels 1114 are provided as a pair of driven wheels that can be driven or rotated by the first motor of the at least one motor 1050 separate from the second motor. Additionally, or alternatively, an operator or user of the snow blower 1100 may selectively push the snow blower 1100 (e.g., manually).

It is noted that although the illustrated snow blower 1100 is shown as a single-stage snow blower, the present disclosure is not limited to the same and may be applicable to any suitable snow blowing power tool, such as a dual-stage (e.g., impeller) snow blower, self-propelled snow blower, manually propelled or push snow blower, etc.

As shown, the auger housing 1106 generally houses the auger 1104. Moreover, the auger housing 1106 can be in communication (e.g., fluid communication) with a chute 1116. Moreover, the auger housing 1106 can be connected with the chute 1116 mechanically, electrically, or both. The chute 1116 can extend, for example, above the auger housing 1106. Specifically, a top wall of the auger housing 1106 may define a chute passage on or about which the chute 1116 is mounted and from which the chute 1116 extends. The chute 1116 can direct discharged snow in a desired direction. Separately or together, the auger housing 1106 and chute 1116 may generally define a snow flow path along which the snow blower 1100 moves such that snow is collected into and discharged from the snow blower 1100. Thus, snow entering the snow blower 1100 at a front opening 1108 defined by the auger housing 1106 may travel along the snow flow path through the auger housing 1106 and then upward (e.g., as motivated by the auger 1104) through the chute 1116 before being discharged from the snow blower 1100 and the snow flow path thereof. Moreover, snow passing along the auger housing 1106 outward from the front opening 1108 (e.g., passing along an exterior panel of the auger housing) may move along the snow flow path as pushed by the outer surface of the auger housing 1106.

In some embodiments, the chute 1116 can rotate about a (e.g., vertical) chute axis. The chute 1116 can include a moveable deflector 1118 configured to rotate the discharge direction about a horizontal axis. In this regard, the direction and height of discharged snow can be controlled. In certain instances, the direction of at least one of the chute 1116 and moveable deflector 1118 can be controlled by the operator at the handle assembly 1110. For instance, a chute lever may be provided on the handle assembly 1110 to selectively rotate the chute 1116. Additionally, or alternatively, a movable flap lever may be provided on the chute 1116 to selectively rotate the moveable deflector 1118.

In at least one example embodiment, the handle assembly 1110 includes a first handle 1130 extending from a first side of the housing 1102 and a second handle 1135 extending from a second side of the housing 1102 opposite the first side. The first handle 1130 and the second handle 1135 can include, for example, a presence detector which selectively permits the at least one motor 1150 to operate based on user presence (e.g., as will be described in detail below). For example, the first handle 1130 and the second handle 1135 may include or be provided with one or more sensing areas or presence sensors supported on the first handle 1130 and the second handle 1135. As shown in FIGS. 11A-11B, the first handle 1130 includes a first input pad region 1131 and the second handle 1135 a second input pad region 1132. As shown, the first and second input pad regions 1131, 1132 may be spaced apart from each other (e.g., at opposite grips). For example, the first and second input pad regions 1004A, 1005B may be on opposing sides of an interface 1120 positioned between upper ends of the first handle 1130 and the second handle 1135.

Referring still to FIGS. 11A-11B, the control assembly 1140 is at least partially disposed in the housing 1102 of the snow blower 1100. The control assembly 1140 includes a controller 1145 communicatively coupled to the at least one motor 1150. The first motor of the at least one motor 1150 is operably coupled to the walking element 1124 and the second motor is operably coupled to the auger 1104 such that the controller 1145 controls operation of the auger 1104 and the walking element 1124 via the first motor and the second motor of the at least one motor 1150. The controller 1145 is also communicatively coupled to at least one presence sensor, such as a first presence sensor 1155 disposed in the first input pad region 1131 of the first handle 1130 and a second presence sensor 1156 disposed in the second input pad region 1132 of the second handle 1135.

In at least one example embodiment, the first presence sensor 1155 and the second presence sensor 1156 include a capacitance sensor or impendence sensor. Additionally, the first presence sensor 1155 and the second presence sensor 1156 may be configured or operable to detect variable (e.g., non-binary) capacitance level (e.g., directly or via a coupled controller), such that variations in grip pressure may be detected. In at least one example embodiment, the first presence sensor 1155 and the second presence sensor 1156 is communicatively coupled to the controller 1145 via a wired connection. In other example embodiments, the first presence sensor 1155 and the second presence sensor 1156 may be communicatively coupled to the controller 1145 via a wireless connection.

FIG. 11A illustrates a disengaged state of the snow blower 1100 and FIG. 11B illustrates an engaged state of the snow blower 1100. As shown in FIG. 11B, an operator 1160 of the snow blower 1100 grips one or both of the first input pad region 1131 of the first handle 1130 and the second input pad region 1131 of the second handle 1135, engaging the first presence sensor 1155 and the second presence sensor 1156, respectively. The controller 1145 receives first data from the first presence sensor 1155 and second data from the second presence sensor 1156 to determine whether the snow blower 1100 is in the engaged state and controls operation of the first motor and the second motor of the at least one motor 1150 based on the snow blower 1100 being in the engaged state, as will be discussed in greater detail with respect to FIG. 14.

With reference to FIG. 11C, the control assembly 1140 may also include one or more touch sensitive controls 1165 communicatively coupled to the controller 1145. For example, the interface 1120 may include the one or more touch sensitive controls 1165 for accessibility by the operator 1160 of the snow blower 1100. The one or more touch sensitive controls 1165 may include one or more capacitance sensors, one or more impedance sensors, or both the one or more capacitance sensors and the one or more impedance sensors.

In at least one example embodiment, the one or more touch sensitive controls 1165 control an operational aspect of the snow blower 1100. Example controls include an activation input to start or activate movement of one or both of the first motor and the second motor of the at least one motor 1150, a speed-setting interface for adjusting a speed of the plurality of wheels 1114 in the case of driven wheel(s) 1114, an eco-mode or overdrive/boost selector for adjusting a speed of the auger 1104, an auxiliary controller which affects a state of an auxiliary component of the snow blower 1100 (such as one or more headlights, etc.), a rotational direction input for controlling a rotational direction of one or both of the plurality of wheels 1114 and the auger 1104 via the first motor and the second motor of the at least one motor 1150, or a combination thereof. The user can engage the one or more touch sensitive controls 1165 based on the working operation being performed and a desired outcome.

Moreover, the one or more touch sensitive controls 1165 may respond to a touch or a gesture, such as tapping or sliding, to activate various functions of the snow blower 1100. Additionally, the one or more touch sensitive controls 1165 may be disposed under a cover, such as a sticker, applied to the interface 1120 or disposed within the interface 1120 for protection from external elements, such as dirt and water.

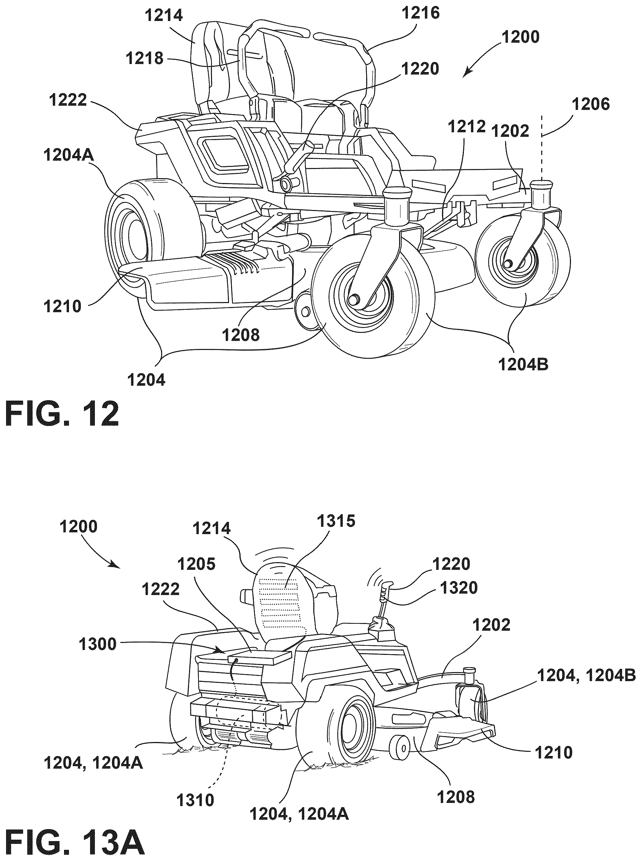

FIG. 12 illustrates a lawnmower 1200 in accordance with an exemplary embodiment. The depicted lawnmower 1200 is a riding lawnmower, however in other instances the lawnmower 1200 can be a push lawnmower, an autonomous lawnmower, or another type of powered lawn maintenance tool, such as a tractor, a powered wheelbarrow, a skid steer, or the like. The lawnmower 1200 generally includes a frame 1202 and a walking element for transporting the frame 1202 over an underlying ground surface. As shown in FIG. 12, the walking element includes a plurality of wheels 1204 supporting the frame 1202. The wheels 1204 can include at least one powered (driven) wheel 1204A. The wheels 1204 can include at least one passive wheel 1204B, such as a caster wheel. In at least one example embodiment, the at least one powered wheel 1204A includes a plurality of powered wheels 1204A, such as a left powered wheel and a right powered wheel. The powered wheel(s) 1204A are each driven by a first motor (or motors) 1310 (shown in FIGS. 13A-13B). In some implementations, the first motor 1310 can directly drive the powered wheel 1204A. In other implementations, a gearbox or other intermediary torque transfer element can be disposed between the first motor 1310 and the powered wheel 1204A. Steering of the lawnmower 1200 may be performed by adjusting the motor speed associated with each of the powered wheels 1204A. For example, the lawnmower 1200 may turn left in response to a right powered wheel 1204A being driven faster than a left powered wheel 1204A. Conversely, the lawnmower 1200 may turn right in response to a left powered wheel 1204A being driven faster than a right powered wheel 1204A. In some instances, the passive wheel(s) 1204B lack independent steering control and spin freely about a rotational axis 1206. In other instances, the passive wheel(s) 1204B can be steered, e.g., by a motor that drives the passive wheel(s) 1204B about the rotational axis 1206.

The lawnmower 1200 includes a cutting deck 1208 supported by the frame 1202. The cutting deck 1208 houses one or more cutting implements (not shown), such as one or more cutting blades, that are rotatably driven by a second motor (not shown). In other example embodiments, the first motor 1310 may drive the one or more cutting implements in addition to one or more of the wheels 1204. The cutting deck 1208 can include a discharge chute 1210 for directing debris from the cutting deck 1208 during operation of the cutting implements. The cutting deck 1208 can be coupled to the frame 1202 through a suspension 1212 that allows the cutting deck 1208 to move relative to the frame 1202.

A seat 1214 is coupled to the frame 1202 and provides an area for a user or operator to reside while operating the lawnmower 1200. More specifically, the seat 1214 may be coupled to a housing 1222 supported by the frame 1202 of the lawnmower. The seat 1214 is in the vicinity of one or more control inputs that allow the user to control operation of the lawnmower 1200, such as a steering direction, a motor speed, or both a steering direction and a motor speed. The depicted control inputs include a left lap bar 1216, a right lap bar 1218, and a handle 1220. The left and right lap bars 1216 and 1218 are each rotatable about a pivot axis to allow the user to input steering commands to the lawnmower 1200. The user can push and pull on the left and right lap bars 1216 and 1218, causing the lap bars 1216 and 1218 to displace about the pivot axis. The farther forward the left and right lap bars 1216 and 1218 are pushed, the faster the lawnmower 1200 travels. By pushing the right lap bar 1218 farther forward than the left lap bar 1216, i.e., generating relative displacement between the left and right lap bars 1216 and 1218, a control system of the lawnmower 1200 can determine that the user wants the lawnmower 1200 to turn one direction (e.g., left). By pushing the left lap bar 1216 farther than the right lap bar 1218, the control system can determine that the user wants the lawnmower 1200 to turn in the opposite direction (e.g., right). The relative difference in displacement between the left and right lap bars 1216 and 1218 can provide input as to how quickly the user wants the lawnmower 1200 to turn. When the user wants to turn quickly, the relative displacement between the left and right lap bars 1216 and 1218 is relatively large (i.e., one of the lap bars 1216 or 1218 is displaced significantly farther than the other lap bar 1216 or 1218). When the user wants to turn relatively slowly, the relative displacement between the left and right lap bars 1216 and 1218 is small. In other embodiments, the user input(s) can include an accelerator pedal, a steering wheel, a joystick, another steering implement, or any combination thereof.

The handle 1220 may be operably coupled to the cutting deck 1208 and allow the user to raise and lower the cutting deck 1208 to a desired height relative to a ground surface. Additionally, or alternatively, the handle 1220 may allow the operator to input steering commands to the lawnmower 1200. For example, the handle 1220 may be in the form of a joystick and used in lieu of the left and right lap bars 1216 and 1218, as shown in FIGS. 13A-13B.

FIG. 13A illustrates schematic view of a control assembly 1300 of the lawnmower 1200 of FIG. 12 in a disengaged state in accordance with embodiments of the present disclosure. FIG. 13B illustrates schematic view of the control assembly 1300 of the lawnmower 1200 of FIG. 12 in an engaged state in accordance with embodiments of the present disclosure.

With reference to FIGS. 13A-13B, the control assembly 1300 is at least partially disposed in the housing 1222 of the lawnmower 1200. The control assembly 1300 includes a controller 1305 communicatively coupled to at least one motor, such as the first motor 1310 and the second motor. The first motor 1310 is operably coupled to the wheels 1204 and the second motor is operably coupled to one or both of the cutting implements (housed by the cutting deck 1208) such that the controller 1305 controls operation of the wheels 1204 and the cutting implement via the first motor 1310 and the second motor, respectively. The controller 1305 is also communicatively coupled to a sensing area, such as a first presence sensor 1315 and a second presence sensor 1320. The first presence sensor 1315 is disposed in at least a portion of the seat 1214. As shown in FIGS. 13A-13B, the second presence sensor 1320 is disposed in a grip of the handle 1220. However, in other example embodiments, the second presence sensor 1320 may be disposed in one or both of the left and right lap bars 1216 and1218 shown in FIG. 12.

In at least one example embodiment, the first presence sensor 1315 and the second presence sensor 1320 include a capacitance sensor or impendence sensor. Additionally, the first presence sensor 1315 and the second presence sensor 1320 may be configured or operable to detect variable (e.g., non-binary) capacitance level (e.g., directly or via a coupled controller), such that variations in grip pressure may be detected. In at least one example embodiment, the first presence sensor 1315 and the second presence sensor 1320 are communicatively coupled to the controller 1305 via a wired connection. In other example embodiments, the first presence sensor 1315 and the second presence sensor 1320 may be communicatively coupled to the controller 1305 via a wireless connection.

FIG. 13A illustrates a disengaged state of the lawnmower 1200 and FIG. 13B illustrates an engaged state of the lawnmower 1200. As shown in FIG. 13B, an operator 1325 of the lawnmower 1200 engages the first presence sensor 1315 when seated in the seat 1214 and engages the second presence sensor 1320 when the handle 1220 is gripped. The controller 1305 receives first data from the first presence sensor 1315 and second data from the second presence sensor 1320 to determine whether the lawnmower 1200 is in the engaged state and controls operation of one or both of the first motor 1310 and the second motor based on the lawnmower 1200 being in the engaged state, as will be discussed in greater detail with respect to FIGS. 14-17.

The control assembly 1300 may also include one or more touch sensitive controls (not shown) communicatively coupled to the controller 1305. For example, the lawnmower 1200 may include an interface in the vicinity of the operator 1325 including the one or more touch sensitive controls for accessibility by the operator 1325. Additionally, or alternatively, one or more handles of the lawnmower 1200, such as the left lap bar 1216, the right lap bar 1218, and the handle 1220, may include the one or more touch sensitive controls. The one or more touch sensitive controls 1365 may include one or more capacitance sensors, one or more impedance sensors, or both the one or more capacitance sensors and the one or more impedance sensors.

In at least one example embodiment, the one or more touch sensitive controls control an operational aspect of the lawnmower 1200. Example controls include an activation input to start or activate movement at one or both of the first motor 1310 and the second motor; a speed-setting interface for adjusting a speed of the wheels 1204, such as the driven wheel(s) 1204A; an eco-mode or overdrive/boost selector for adjusting a speed of the cutting implement housing in the cutting deck 1208; an auxiliary controller which affects a state of an auxiliary component of the lawnmower 1200 (such as one or more headlights, bagger doors, etc.), or the like. The user can engage the one or more touch sensitive controls based on the working operation being performed and a desired outcome.

Moreover, the one or more touch sensitive controls may respond to a touch or a gesture, such as tapping or sliding, to activate various functions of the lawnmower 1200. Additionally, the one or more touch sensitive controls may be disposed under a cover, such as a sticker, applied to the interface or disposed within the interface for protection from external elements, such as dirt and water.

FIG. 14 illustrates a schematic diagram of a power tool 1400 in accordance with embodiments of the present disclosure. The power tool 1400 may include the log splitter 100, the power tool 300, the chainsaw 400, the hedge trimmer 600, the power tool 800, the tiller 900, the lawnmower 1000, the snow blower 1100, and the lawnmower 1200 discussed with respect to FIGS. 1-13B.

The power tool 1400 includes control circuitry 1405 that implements a control scheme to affect a selected operational state of the power tool 1400. The control circuitry 1405 receives power from a power source 1440. The power source 1440 includes one or more removable power sources, such as one or more removable batteries, for supplying power to the power tool 1400 as well as various other power tools. The control circuitry 1405 includes one or more processors 1410 coupled to a memory 1415. The processor(s) 1410 can be any suitable processing device (e.g., a control circuitry, a processor core, a microprocessor, an application specific integrated circuit, a field programmable gate array, a controller, a microcontroller, etc.) and can be one processor or a plurality of processors that are operatively connected. The memory 1415 can include one or more non-transitory computer-readable storage media, such as RAM, ROM, EEPROM, EPROM, one or more memory devices, flash memory devices, etc., and combinations thereof. The memory 1415 can store information that can be accessed by the processor(s) 1410. For instance, the memory 1415 (e.g., one or more non-transitory computer-readable storage mediums, memory devices) can include computer-readable instructions 1420 that can be executed by the processor(s) 1410. The instructions 1420 can be software, firmware, or both written in any suitable programming language or can be implemented in firmware or hardware. Additionally, or alternatively, the instructions 1420 can be executed in logically or virtually separate threads on processor(s) 1410. For example, the memory 1415 can store instructions 1420 that when executed by the processor(s) 1410 cause the processor(s) 1410 to perform operations such as any of the methods, operations, and functions as described herein. The control circuitry 1405 may include a printed circuit board (PCB) incorporating one or more components described herein interconnected by wiring, solder, and other communication protocols. While certain components are described as being part of the control circuitry 1405, e.g., part of the PCB, one or more components can be part of a separate controller or include discrete architecture in communication with the control circuitry 1405 through a wired or wireless interface. For instance, reference below to motor controllers is made with respect to control circuitry 1405; however, the motor controllers may be separate from the PCB, instead located at the motor itself.

The control circuitry 1405 can receive a signal from a controller 1425 indicative of a current state of the controller 1425. The controller 1425 can include the controller 205, 315, 505, 705, 820, 945, 1045, 1145, 1305 discussed with respect to FIGS. 1-13B. For example, the signal can include data indicative of operator engagement with the sensors 215, 220, 335, 340, 515, 520, 715, 720, 955, 1055, 1056, 1155, 1156, 1315, 1320 and/or the touch sensitive controls 830 described herein. Moreover, the signal can indicate a motor speed, or the like, in some example embodiments. The control circuitry 1405 can control a state of a motor 1430 in response to the signals received from the controller 1425. The motor 1430 can include the first motor 1310 and the second motor described herein.

In some implementations, the control circuitry 1405 controls the state of the motor 1430 through a motor controller 1435. For example, the processor 1410 can generate control instructions which are transmitted to the motor controller 1435. The motor controller 1435 may be part of the control circuitry 1405 or part of a discrete (separate) control circuitry of the power tool 1400. The motor controller 1435 can adjust operation of the motor 1430 in view of the control instructions received from the processor 1410. For example, the motor controller 1435 can modulate (increase or decrease) power supplied to the motor 1430 from the power source 1440 in view of control instructions received from the processor 1410. In some implementations, the motor controller 1435 includes a Proportional - Integral - Derivative (PID) controller that inputs instructions from the processor 1410 and implements adjustments to the motor 1430 in response thereto. As the motor 1430 is driven to operate at one or more variable states, one or both of a working implement 1445 (e.g., the rack 140, the work element 310, the cutting implement 412, the first blade 602 and the second blade 604, the tines 906, the working element or cutting blade of the lawnmower 1000, the auger 1104 of the snow blower 1100, the cutting implement housed in the cutting deck 1208 of the lawnmower 1200) and a walking element 1450 (e.g., the walking element 924 including the first and second wheels 926 and 928 of the tiller 900, the walking element 1024, the walking element 1124, the wheels 1204 of the lawnmower 1200) are caused to move at one or more variable speeds.

In other example embodiments, the power tool 1400 may include a drive motor (not shown) separate from the motor 1430 such that the drive motor drives operation of the walking element 1450 and the motor 1430 drives operation of the working implement 1445. In such example embodiments, the power tool 1400 may also include a second motor controller separate from the motor controller 1435 communicably coupled between the power source 1440 and the drive motor. In some example embodiments, the motor 1430 includes a single working implement motor coupled to one or more working implements 1445. Where a plurality of working implements 1445 are driven by a single working implement motor, the working implements 1445 can be connected together, e.g., through a belt and pulley system which allows the single motor 1430 to impart force to each of the working implements 1445. In other implementations, the motor 1430 drives a single working implement 1445, such as through a direct drive connection. In yet other implementations, the motor 1430 includes a plurality of working motors that each drive a single working implement 1445, such as through a direct drive connection between each of the working motors and each of the cutting implements. The working implement motor(s) 1430 can be driven by a single motor controller 1435 or by a plurality of motor controllers 1435. In some implementations, the single motor controller 1435 or each of the plurality of motor controllers 1435 can be part of the control circuitry 1405 and receive the control signal, e.g., from the processor 1410. In other implementations, the single motor controller 1435 or each of the plurality of motor controllers 1435 can be in communication with the control circuitry 1405. The individual motor controllers 1435 may communicate with one another and, optionally, adjust performance of their respective motor 1430 in view of the communications exchanged therebetween (i.e., between individual motor controllers 1435). In some instances, the plurality of motor controllers 1435 can operate in a primary-secondary configuration where one of the plurality of motor controllers 1435 (i.e., a primary motor controller 1435) receives the control signal from the control circuitry 1405 and disseminates control instructions to other(s) of the plurality of motor controllers 1435 (i.e., secondary motor controller(s) 1435).

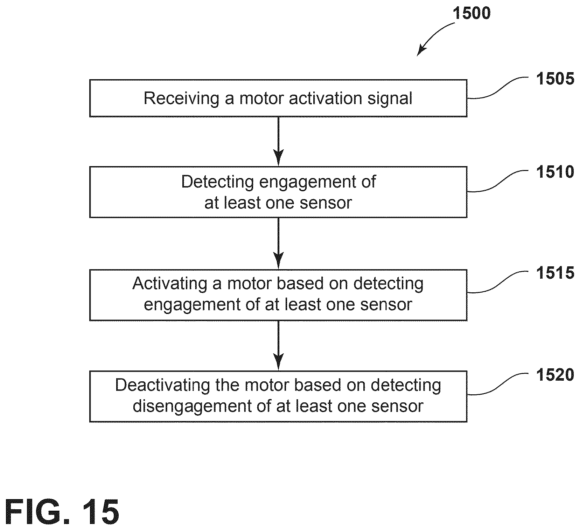

FIG. 15 illustrates a flow chart of a method 1500 of operating a power tool in accordance with embodiments of the present disclosure. The control circuitry 1405 discussed with respect to FIG. 14 may be operable to perform the method 1500. Except as otherwise indicated, one or more steps in the method 1500 may be changed, rearranged, performed in a different order, performed simultaneously, or otherwise modified without deviating from the scope of the present disclosure.

The method 1500 includes receiving a motor activation signal at 1505, detecting engagement of at least one presence sensor at 1510, activating a motor based on detecting engagement of the at least one presence sensor at 1515, and deactivating the motor based on detecting disengagement of the at least one presence sensor at 1520.

Receiving a motor activation signal at 1505 may include receiving a motor activation signal from an input of a power tool, such as button, switch, lever, trigger, sensing areas, presence sensors, or other suitable actuator. The power tool may include the log splitter 100 discussed with respect to FIGS. 1-2B, the power tool 300 discussed with respect to FIGS. 3A-3B, the chainsaw 400 discussed with respect to FIGS. 4-5B, the hedge trimmer 600 discussed with respect to FIGS. 6-7B, the power tool 800 discussed with respect to FIGS. 8A-8B, the tiller 900 discussed with respect to FIGS. 9A-9C, the lawnmower 1000 discussed with respect to FIGS. 10A-10B, the snow blower 1100 discussed with respect to FIGS. 11A-11C, and the lawnmower 1200 discussed with respect to FIGS. 12-13B. Moreover, the input of the power tool can include the sensors 215, 220, 335, 340, 515, 520, 715, 720, 955, 1055, 1056, 1155, 1156, 1315, 1320 and/or the touch sensitive controls 830 described herein. Additionally, or alternatively, the input may include a secondary actuator engageable by the operator in addition to the sensors 215, 220, 335, 340, 515, 520, 715, 720, 955, 1055, 1056, 1155, 1156, 1315, 1320 and/or the touch sensitive controls 830 for providing the motor activation signal.

Detecting engagement of the at least one presence sensor at 1510 includes detecting operator engagement of the sensors 215, 220, 335, 340, 515, 520, 715, 720, 955, 1055, 1056, 1155, 1156, 1315, 1320 and/or the touch sensitive controls 830. For example, the controller 1425 receives data indicative of operator engagement with the at least one presence sensor. Moreover, the controller 1425 receives first data indicative of operator engagement with the first presence sensor and receives second data indicative of operator engagement with the second presence sensor. Using the data, including the first data and the second data, the controller 1425 determines whether the power tool is in the engaged state or the disengaged state.

In at least one example embodiment, detecting engagement of at least one presence sensor at 1510 also includes detecting a pressure exerted on the at least one presence sensor or one or both of the first presence sensor and the second presence sensor by the operator. In such example embodiments, the method 1500 may further include controlling a secondary operation of the motor in response to the pressure detected. For example, a speed of the motor may be controlled based on the pressure detected such that increasing the pressure exerted increases the speed of the motor and decreasing the pressure exerted decreases the speed of the motor.

Activating a motor based on detecting engagement of the first presence sensor and the second presence sensor at 1515 includes activating a motive device, such as the at least one motor 1430 described herein, based on determining that the power tool is in the engaged state. For example, the power tool is in the engaged state when the at least one presence sensor or one or both of the first presence sensor and the second presence sensor are engaged by the operator. In at least one embodiment, both the first presence sensor and the second presence sensor must be engaged by the operator to initiate operation of the motor. Similarly, both hands of the operator must be engaged with the at least one presence sensor to initiate operation of the motor. Optionally, continued operation of the motor may be contingent on detected engagement of at least one of the first presence sensor and the second presence sensor. Similarly, continued operation of the motor may be contingent on detected engagement of one hand of the operator with the at least one presence sensor. Accordingly, at 1515, the method 1500 includes permitting continued activation of the motor while the operator engages with the power tool with one or both hands.

Deactivating the motor based on detecting disengagement of the at least one presence sensor at 1520 includes deactivating the motor or preventing operation of the motor in response to determining that the operator has removed one or both hands from the power tool. For example, one or both hands are removed from the at least one presence sensor or the operator disengages one or both of the first presence sensor and the second presence sensor. If the operator releases at least one hand from the at least one presence sensor 955 during operation, operation of the motor may be stopped. Similarly, if the operator releases one or both of the first presence sensor and the second presence sensor during operation, operation of the motor is stopped. In at least one example embodiment, a brake may be applied to deactivate the motor or a cutting implement of the power tool at 1520 upon detecting disengagement by the operator.

Additionally, activation of the motor may be prevented based on detecting disengagement by the operator. For example, activation of the motor may require that both hands of the operator be engaged with the at least one presence sensor or that both the first presence sensor and the second presence sensor be engaged by the operator.

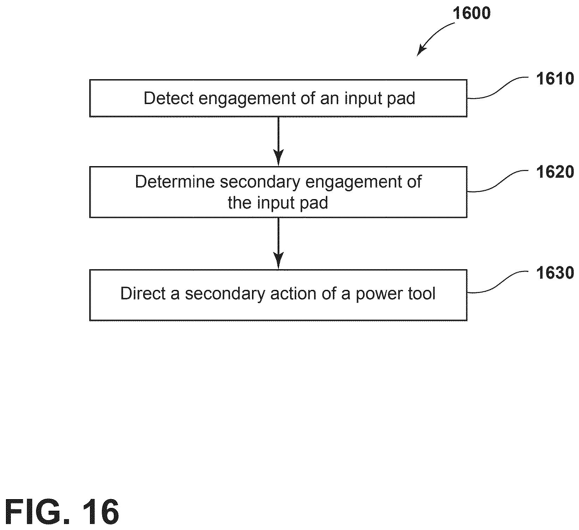

Moreover, the method 1500 may return to step 1505 and repeat after deactivation of the motor at 1520. For example, subsequent activation of the motor may require returning to 1505 to reapply the method 1500. Turning especially to FIG. 16, at 1610, the method 1600 includes detecting engagement of an input pad, such as at a control implement. For example, 1610 may detect that one or both a first and a second input pad regions are being engaged (e.g., grasped or contacted) by a user. The first and second input pad regions may each include one of the sensors 215, 220, 335, 340, 515, 520, 715, 720, 955, 1055, 1056, 1155, 1156, 1315, 1320 and/or the touch sensitive controls 830 described herein. Optionally, the detection at 1610 may be a binary detection (e.g., detected or undetected). Thus, a single threshold (e.g., first capacitance threshold) may be provided for the detection at each input pad region.

At 1620, the method 1600 includes determining a secondary engagement of the input pad. The secondary engagement may include or be provided as, for example, a variable pressure threshold. Thus, a non-binary engagement threshold (e.g., engagement threshold greater than that of 1610) may be provided. For example, a second capacitance threshold greater than the first capacitance threshold may be provided. The determination of 1620 may, in turn, correspond to a user increasing pressure or engagement with the input pad (e.g., following an initial engagement detected at 1610).

At 1630, the method 1600 includes directing a secondary action of the power tool (e.g., in response to 1620). The secondary action may be directed to or separate from the motor. As an example, a secondary action may include adjusting a speed (e.g., a rotational speed or reciprocal speed) for a working implement (e.g., a cutting implement). Thus, an instance of increased grip pressure at the input pad may cause the speed of the working implement to change (e.g., according to set speed sequence wherein each new instance of increased grip pressure indexes the selected blade speed along the sequence). As an additional or alternative example, a secondary action may include adjusting a wheel speed for the walking elements (e.g., wheels). Thus, an instance of increased grip pressure at the input pad may cause the wheel speed to change (e.g., according to set speed sequence wherein each new instance of increased grip pressure indexes the selected wheel speed along the sequence). As another additional or alternative example, a secondary action comprises alternating activation of a light source mounted to the frame. Thus, an instance of increased grip pressure at the input pad may cause the light source to alternate from active/illuminate to inactive/unilluminated or from inactive/unilluminated to active/illuminate.

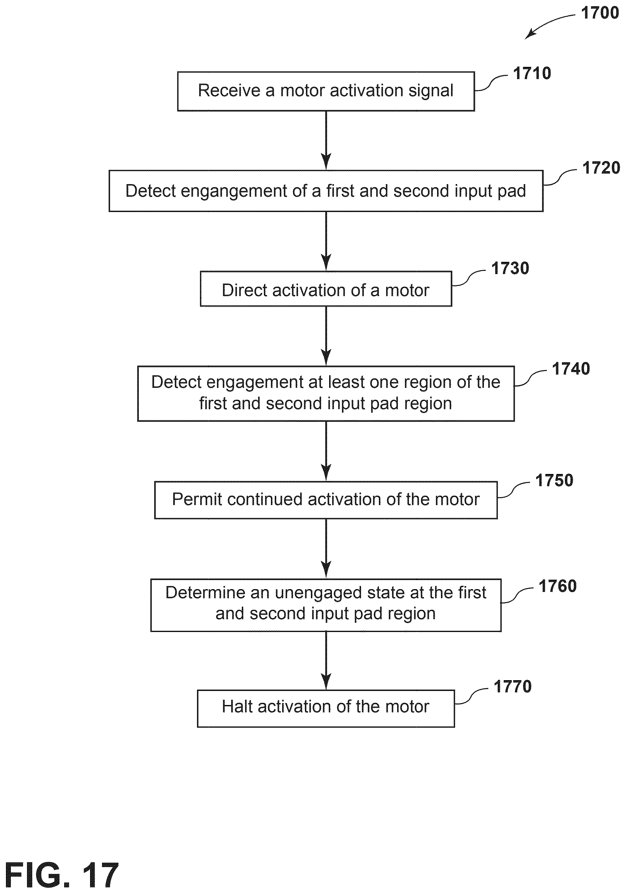

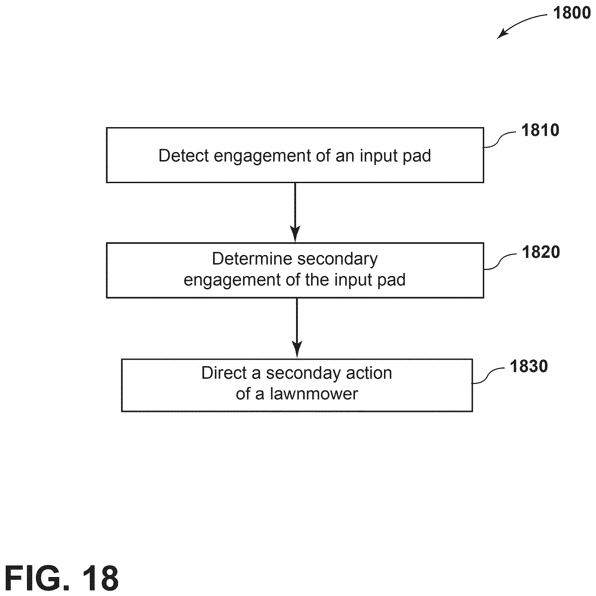

With reference to FIGS. 17 and 18, the present disclosure may further be directed to methods (e.g., method 1700 or 1800) of operating a power tool, such as the lawnmower 1000. In exemplary embodiments, the control circuitry 1400 may be operable to perform various steps of the methods 1700, 1800 in accordance with the present disclosure.

The methods (e.g., 1700 or 1800) may occur as, or as part of, a tool operation. In particular, the methods (e.g., 1700 or 1800) disclosed herein may advantageously encourage safe or intuitive operation of the tool by a user.

It is noted that the order of steps within methods 1700 and 1800 are for illustrative purposes. Moreover, none of the methods 1700 and 1800 are mutually exclusive. In other words, methods within the present disclosure may include one or more of methods 1700 and 1800. All may be adopted or characterized as being fulfilled in a common operation. Except as otherwise indicated, one or more steps in the below method 1700 or 1800 may be changed, rearranged, performed in a different order, or otherwise modified without deviating from the scope of the present disclosure.

With respect to FIG. 17, at 1710, the method 1700 includes receiving a motor activation signal. The motor activation signal may be received, for instance, from a dedicated input (e.g., button, switch, touch pad, etc.), such as in response to a user engagement with the dedicated input. Additionally or alternatively, the motor activation signal may be received from a control implement, such as a one or more sensors (e.g., one or more of the presence detection sensors or input pad regions, as described above). In some such embodiments, engagement of a dedicated input (e.g., input apart from the presence detection sensor) is not required in order to prompt transmission (and subsequent reception of) the motor activation signal.

At 1720, the method 1700 includes detecting engagement of a first input pad region and second input region (e.g., following 1710). Thus, 1720 may detect that at least one of the first and second input pad regions are being engaged (e.g., grasped or contacted) by a user at the same time. Optionally, the detection at 1720 may be a binary detection (e.g., detected or undetected). Thus, a single threshold (e.g., capacitance threshold) may be provided for the detection at each input pad region. In some such embodiments, 1720 is a continuation of 1710 (e.g., continued engagement of one or more of the first input pad region and second input region), such as might occur as part of a minimum, continuous, detected engagement time of one or more of the first input pad region and second input region. In certain embodiments, 1720 requires detection of simultaneous engagement of both the first input pad region and second input region. A discrete detection of the threshold may be required (e.g., at the same time) at each of the first input pad region and second input region.

At 1730, the method 1700 includes directing activation of the motor, such as to rotate a cutting implement or walking element. Step 1730 may be contingent or based on 1720. In some embodiments, 730 follows or is in response to one or both of 1710 and 1720.

At 1740, the method 1700 includes detecting engagement in at least one of the first and second input pad region (e.g., following 1730). In other words, it may be detected that the user engages or contacts either the first input pad region, the second input pad region, or both of the first and second input pad region. The detected engagement of 1740 may occur while the motor remains active.

At 1750, the method 1700 includes permitting continued activation of the motor (e.g., in response to 1740). The activation of the motor initiated at 1730 may, in turn, continue (e.g., unabated) through 1750. Optionally, continued activation of the motor (e.g., perpetuating 1750) may be contingent on detected engagement of at least one of the first and second input pad region (e.g., as indicated at 1740).

At 1760, the method 700 includes determining an unengaged state at the first and second input pad region. Thus, it may be determined that neither the first input pad region nor the second input pad region is being engaged (e.g., contacted) by a user, or that there has otherwise been a break in the detection of engagement of at least one of the first and second input pad region. This may, for instance, occur as a result of a user releasing both hands from the touch pad of the control implement or grips of the handle assembly.

At 770, the method 1700 includes halting activation of the motor (e.g., based on or in response to 1760). Thus, rotation of the cutting implement or walking element may be stopped, restricted, or otherwise not actively driven by the motor. Optionally, a brake may be applied to the cutting implement or walking element.

Subsequent activation of the motor may require, for instance, returning to 1710 to reapply the method 1700.

Turning now to FIG. 18, at 1810, the method 1800 includes detecting engagement of an input pad, such as at a control implement. For instance, 1810 may detect that one or both the first and second input pad regions are being engaged (e.g., grasped or contacted) by a user. Optionally, the detection at 1810 may be a binary detection (e.g., detected or undetected). Thus, a single threshold (e.g., first capacitance threshold) may be provided for the detection at each input pad region.

At 1820, the method 1800 includes determining a secondary engagement of the input pad. The secondary engagement may include or be provided as, for example, a variable pressure threshold. Thus, a non-binary engagement threshold (e.g., engagement threshold greater than that of 1810) may be provided. For instance, a second capacitance threshold greater than the first capacitance threshold may be provided. The determination of 1820 may, in turn, correspond to a user increasing pressure or engagement with the input pad (e.g., following an initial engagement detected at 1810).

At 1830, the method 1800 includes directing a secondary action of the power tool (e.g., in response to 1820). The secondary action may be directed to or separate from the motor. As an example, a secondary action may include adjusting a blade speed for the cutting implement. Thus, an instance of increased grip pressure at the input pad may cause the blade speed to change (e.g., according to set speed sequence wherein each new instance of increased grip pressure indexes the selected blade speed along the sequence). As an additional or alternative example, a secondary action may include adjusting a wheel speed for the walking elements. Thus, an instance of increased grip pressure at the input pad may cause the wheel speed to change (e.g., according to set speed sequence wherein each new instance of increased grip pressure indexes the selected wheel speed along the sequence). As another additional or alternative example, a secondary action comprises alternating activation of a light source mounted to the frame. Thus, an instance of increased grip pressure at the input pad may cause the light source to alternate from active/illuminate to inactive/unilluminated or from inactive/unilluminated to active/illuminate.

Further aspects of the disclosure are provided by one or more of the following embodiments:
A power tool comprising: a housing including a motor; a work element extending from the housing and operably coupled to the motor; a handle extending from the housing and comprising a first presence sensor; a second presence sensor, wherein the first presence sensor and the second presence sensor are configured to detect an engaged state in which an operator engages the first presence sensor and the second presence sensor, and a disengaged state in which the operator disengages one or both of the first presence sensor and the second presence sensor; and a controller operably coupled to the first presence sensor, the second presence sensor, and the motor, wherein the controller is configured to perform a plurality of operations, the plurality of operations comprising: receiving first data indicative of operator engagement with the first presence sensor, receiving second data indicative of operator engagement with the second presence sensor, determining, using the first data and the second data, that the power tool is in the engaged state, and controlling operation of the motor based on the power tool being in the engaged state.

The power tool of any one or more of the embodiments, wherein the plurality of operations further comprise deactivating the motor based on the power tool being in the disengaged state.

The power tool of any one or more of the embodiments, wherein the first presence sensor comprises a capacitance sensor and the second presence sensor comprises a capacitance sensor.

The power tool of any one or more of the embodiments, wherein the first presence sensor comprises an impedance sensor and the second presence sensor comprises an impedance sensor.

The power tool of any one or more of the embodiments, wherein the power tool comprises a log splitter, the log splitter comprising: a hand or arm rest coupled to the housing adjacent the handle, wherein the second presence sensor is disposed in the hand or arm rest; and a support arm extending from the housing between a first end and a second end; wherein the work element comprises a rack coupled to at least a portion of the support arm, the rack configured to move along the support arm in a forward direction to an extended position adjacent the second end and a reverse direction to a starting position adjacent the first end; and wherein, in the engaged state, the handle is configured to move between a first position in which the motor is activated to move the rack at least in the forward direction along the support arm and a second position in which the motor is deactivated.

The power tool of any one or more of the embodiments, wherein: the handle comprises a first handle including a first grip and the power tool further comprises a second handle including a second grip, the first handle extending from a first side of the housing and the second handle extending from a second side of the housing opposite the first side; the first presence sensor is disposed in the first grip of the first handle and the second presence sensor is disposed in the second grip of the second handle; the work element comprises an auger; and the motor is configured to rotate the auger in the engaged state.

The power tool of any one or more of the embodiments, wherein: the power tool comprises a chainsaw; the work element comprises a guide bar defining a cutting track along a perimeter of the guide bar and a cutting implement disposed along the cutting track of the guide bar; the handle comprises a first handle extending from a rear end of the housing including a first grip and the power tool further comprises a second handle extending from the housing including a second grip; the first presence sensor is disposed in the first grip of the first handle and the second presence sensor is disposed in the second grip of the second handle; and the motor is configured to move the cutting implement about the cutting track of the guide bar in the engaged state.

The power tool of any one or more of the embodiments, wherein: the power tool comprises a hedge trimmer; the work element comprises a first blade and a second blade; the handle comprises a first handle extending from a rear end of the housing including a first grip and the power tool further comprises a second handle extending from the housing including a second grip; the first presence sensor is disposed in the first grip of the first handle and the second presence sensor is disposed in the second grip of the second handle; and the motor is configured to reciprocate the first blade and the second blade in the engaged state.

The power tool of any one or more of the embodiments, further comprising a power source electrically coupled to the motor.

The power tool of any one or more of the embodiments, wherein the power source is removably couplable to the housing.

The power tool of any one or more of the embodiments, wherein the housing further comprises one or more touch sensitive controls.

The power tool of any one or more of the embodiments, wherein the one or more touch sensitive controls comprise one or more capacitance sensors, one or more impedance sensors, or both one or more capacitance sensors and one or more impedance sensors.

The power tool of any one or more of the embodiments, wherein the one or more touch sensitive controls are configured to control a speed of the motor.

A method of operating a power tool, comprising: receiving a motor activation signal; detecting engagement of a first presence sensor; detecting engagement of a second presence sensor; activating a motor of the power tool based on engagement of the first presence sensor and the second presence sensor; and deactivating the motor based on disengagement of one or both of the first presence sensor and the second presence sensor.

The method of any one or more of the embodiments, further comprising providing a housing including the motor, a work element extending from the housing and operably coupled to the motor, and a handle extending from the housing and including the first presence sensor.

The method of any one or more of the embodiments, wherein activating the motor comprises activating the work element.

A control assembly for a power tool comprising: at least one presence sensor; and a controller communicatively coupled to the at least one presence sensor, the controller configured to perform a plurality of operations comprising: receiving data indicative of operator engagement with the at least one presence sensor, determining, using the data, that the power tool is in an engaged state based on user engagement with both the at least one presence sensor or in a disengaged state based on user disengagement with the at least one presence sensor, and controlling operation of at least one motor operably coupled to the controller based on the power tool being in the engaged state.

The control assembly of any one or more of the embodiments, wherein controlling operation of the at least one motor comprises activating the motor based on the power tool being in the engaged state and deactivating the motor based on the power tool being in the disengaged state.

The control assembly of any one or more of the embodiments, wherein the plurality of operations further comprise: detecting a pressure exerted on the at least one presence sensor; and controlling a secondary operation of the at least one motor in response to pressure detected.

The control assembly of any one or more of the embodiments, wherein the secondary operation comprises a speed of the at least one motor.

A power tool comprising: a housing including a motor; a walking element coupled to the housing and operably coupled to the motor, the walking element configured to move the power tool; a working implement extending from the housing and operably coupled to the motor; a handle extending from the housing; at least one presence sensor disposed in the handle and operable to detect an engaged state in which an operator engages the at least one presence sensor and a disengaged state in which the operator disengages the at least one presence sensor; and a controller operably coupled to the at least one presence sensor and the motor, wherein the controller is configured to perform a plurality of operations, the plurality of operations comprising: receiving data indicative of operator engagement with the at least one presence sensor, determining, using the data, that the power tool is in the engaged state, and controlling operation of the motor based on the power tool being in the engaged state.

The power tool of any one or more of the embodiments, wherein the plurality of operations further comprise deactivating the motor based on the power tool being in the disengaged state.

The power tool of any one or more of the embodiments, wherein the at least one presence sensor comprises a capacitance sensor.

The power tool of any one or more of the embodiments, wherein the at least one presence sensor comprises an impedance sensor.

The power tool of any one or more of the embodiments, wherein the walking element comprises a plurality of wheels.

The power tool of any one or more of the embodiments, wherein: the power tool comprises a tiller; and the working implement comprises a tine rotatable about a rotational axis.

The power tool of any one or more of the embodiments, wherein: the power tool comprises a lawnmower; and the working implement comprises at least one cutting blade rotatable about a rotational axis.

The power tool of any one or more of the embodiments, wherein: the power tool comprises a snow blower; the working implement comprises an auger rotatable about a rotational axis; the handle comprises a first handle extending from a first side of the housing including a first grip and a second handle extending from a second side of the housing including a second grip; and the at least one presence sensor comprises a first presence sensor disposed in the first grip of the first handle and a second presence sensor disposed in the second grip of the second handle.

The power tool of any one or more of the embodiments, further comprising a power source electrically coupled to the motor.

The power tool of any one or more of the embodiments, wherein the power source is removably couplable to the housing.

The power tool of any one or more of the embodiments, wherein the housing further comprises one or more touch sensitive controls.

The power tool of any one or more of the embodiments, wherein the one or more touch sensitive controls comprise one or more capacitance sensors, one or more impedance sensors, or both one or more capacitance sensors and one or more impedance sensors.

The power tool of any one or more of the embodiments, wherein the one or more touch sensitive controls are configured to control a speed of the motor.

The power tool of any one or more of the embodiments, wherein the controlling operation of the motor based on the power tool being in the engaged state comprises controlling operation of the walking element, the working implement, or both the walking element and the working implement.

A method of operating a power tool comprising: receiving a motor activation signal; detecting engagement of at least one presence sensor; activating a motor of the power tool based on engagement of the at least one presence sensor; and deactivating the motor based on disengagement of the at least one presence sensor.

The method of any one or more of the embodiments, further comprising providing a housing including the motor, a walking element coupled to the housing, a working implement extending from the housing and operably coupled to the motor, and a handle extending from the housing and including the at least one presence sensor.

The method of any one or more of the embodiments, wherein activating the motor comprises activating the walking element, the working implement, or both the walking element and the working implement.

The method of any one or more of the embodiments, wherein: the at least one presence sensor comprises a first presence sensor and a second presence sensor; the activating the motor comprises activating the motor based on engagement of both the first presence sensor and the second presence sensor; and the deactivating the motor comprises deactivating the motor comprises deactivating the motor based on disengagement of one or both of the first presence sensor and the second presence sensor.

A control assembly for a power tool comprising: at least one presence sensor; and a controller communicatively coupled to the at least one presence sensor, the controller configured to perform a plurality of operations comprising: receiving data indicative of operator engagement with the at least one presence sensor, determining, using the data, that the power tool is in an engaged state based on user engagement with the at least one presence sensor or in a disengaged state based on user disengagement with the at least one presence sensor, and controlling operation of a motor operably coupled to the controller based on the power tool being in the engaged state.

The control assembly of any one or more of the embodiments, wherein controlling operation of the motor comprises activating the motor based on the power tool being in the engaged state and deactivating the motor based on the power tool being in the disengaged state.

The control assembly of any one or more of the embodiments, wherein the plurality of operations further comprise: detecting a pressure exerted on the at least one presence sensor; and controlling a secondary operation of the motor in response to pressure detected.

The control assembly of any one or more of the embodiments, wherein the secondary operation comprises a speed of the motor.

A power tool comprising: a frame; a seat coupled to the frame for receiving an operator of the power tool; a housing coupled to the frame and including a first motor and a second motor; a walking element coupled to the frame and operably coupled to the first motor; a cutting deck coupled to the frame and including a cutting implement, wherein the cutting implement is operably coupled to the second motor; at least one handle configured to receive a control input from the operator of the power tool; at least one sensor operable to detect an engaged state in which an operator engages the at least one sensor and a disengaged state in which the operator disengages the at least one sensor; and a controller operably coupled to the at least one sensor, the first motor, and the second motor, wherein the controller is configured to perform a plurality of operations, the plurality of operations comprising: receiving data indicative of operator engagement with the at least one sensor, determining, using the data, that the power tool is in the engaged state, and controlling operation of one or both of the first motor and the second motor based on the power tool being in the engaged state.

The power tool of any one or more of the embodiments, wherein the control input comprises a steering direction, a motor speed, or both a steering direction and a motor speed.

The power tool of any one or more of the embodiments, wherein the plurality of operations further comprises deactivating one or both of the first motor and the second motor based on the power tool being in the disengaged state.

The power tool of any one or more of the embodiments, wherein the at least one sensor is disposed in the seat, the at least one handle, or both the seat and the at least one handle.

The power tool of any one or more of the embodiments, wherein the at least one sensor comprises a first presence sensor disposed in the seat and a second presence sensor disposed in the at least one handle.

The power tool of any one or more of the embodiments, wherein: determining, using the data, that the power tool is in the engaged state comprises determining that one or both of the first presence sensor and the second presence sensor are engaged by the operator; and controlling operation of one or both of the first motor and the second motor based on the power tool being in the engaged state comprises: activating one or both of the first motor and the second motor based on both the first presence sensor and the second presence sensor being engaged by the operator, continuing activation of one or both of the first motor and the second motor based on at least one of the first presence sensor and the second presence sensor being engaged by the operator, and deactivating one or both of the first motor and the second motor based on both the first presence sensor and the second presence sensor being disengaged by the operator.

The power tool of any one or more of the embodiments, wherein the at least one sensor comprises a capacitance sensor.

The power tool of any one or more of the embodiments, wherein the at least one sensor comprises an impedance sensor.

The power tool of any one or more of the embodiments, wherein the walking element comprises a plurality of wheels.

The power tool of any one or more of the embodiments, wherein: the power tool comprises a riding lawnmower; and the cutting implement comprises at least one cutting blade rotatable about a rotational axis.

The power tool of any one or more of the embodiments, further comprising a power source electrically coupled to the first motor and the second motor, wherein the power source is removably couplable to the housing.

The power tool of any one or more of the embodiments, wherein the housing further comprises one or more touch sensitive controls.

The power tool of any one or more of the embodiments, wherein the one or more touch sensitive controls comprise one or more capacitance sensors, one or more impedance sensors, or both one or more capacitance sensors and one or more impedance sensors.

The power tool of any one or more of the embodiments, wherein the one or more touch sensitive controls are configured to control a speed of one or both of the first motor and the second motor.

The power tool of any one or more of the embodiments, wherein controlling operation of one or both of the first motor and the second motor based on the power tool being in the engaged state comprises controlling operation of the walking element, the cutting implement, or both the walking element and the cutting implement.

A method of operating a power tool comprising: receiving a motor activation signal; detecting engagement of at least one presence sensor; activating a motor of the power tool based on engagement of the at least one presence sensor; and deactivating the motor based on disengagement of the at least one presence sensor.

The method of any one or more of the embodiments, wherein the power tool comprises a lawnmower, the lawnmower comprising: a seat coupled for receiving an operator of the power tool; a housing including a first motor and a second motor; a walking element operably coupled to the first motor; at least one handle configured to receive a control input from the operator of the power tool; a cutting deck including a cutting implement, wherein the cutting implement is operably coupled to the second motor; at least one sensor operable to detect an engaged state in which an operator engages the at least one presence sensor and a disengaged state in which the operator disengages the at least one presence sensor; and a controller operably coupled to the at least one presence sensor, the first motor, and the second motor.

The method of any one or more of the embodiments, wherein activating the motor comprises activating the walking element by the first motor, the cutting implement by the second motor, or both the walking element and the cutting implement by the first motor and the second motor.

The method of any one or more of the embodiments, wherein: the at least one presence sensor comprises a first presence sensor and a second presence sensor; the activating the motor comprises activating the motor based on engagement of both the first presence sensor and the second presence sensor; and the deactivating the motor comprises deactivating the motor based on disengagement of one or both of the first presence sensor and the second presence sensor.

A control assembly for a power tool comprising: at least one presence sensor; and a controller communicatively coupled to the at least one presence sensor, the controller configured to perform a plurality of operations comprising: receiving data indicative of operator engagement with the at least one presence sensor, determining, using the data, that the power tool is in an engaged state based on user engagement with the at least one presence sensor or in a disengaged state based on user disengagement with the at least one presence sensor, and controlling operation of at least one motor operably coupled to the controller based on the power tool being in the engaged state.

The control assembly of any one or more of the embodiments, wherein controlling operation of the at least one motor comprises activating the at least one motor based on the power tool being in the engaged state and deactivating the at least one motor based on the power tool being in the disengaged state.

The control assembly of any one or more of the embodiments, wherein: the plurality of operations further comprise: detecting a pressure exerted on the at least one presence sensor, and controlling a secondary operation of the at least one motor in response to pressure detected; and the secondary operation comprises a speed of the at least one motor.

A power tool comprising: a frame; a walking element coupled to the frame; a motor supported on the frame; a handle assembly extending rearwardly from the frame; a touch pad supported on the handle assembly and defining a first input pad region and a second input pad region; and a control circuitry in electronic communication with the motor and the touch pad, wherein the control circuitry comprises a processor coupled to a memory storing instructions which, when executed by the processor, cause the control circuitry to execute a tool operation comprising: detecting a simultaneous engagement of the first input pad region and the second input pad region, directing activation of the motor following detecting the simultaneous engagement, detecting engagement of at least one region of the first input pad region and the second input pad region following directing activation, permitting continued activation of the motor based on detecting engagement of at least one region, determining an unengaged state at the touch pad following direction activation, and halting activation of the motor in response to determining the unengaged state.

A power tool of any one or more of the embodiments, wherein the first input pad region is spaced apart from the second input pad region.

A power tool of any one or more of the embodiments, further comprising a cutting implement rotatably mounted to the frame in mechanical communication with the motor for motor-driven rotation.

A power tool of any one or more of the embodiments, further comprising a walking element movably mounted to the frame in support thereof, the walking element being in mechanical communication with the motor for motor-driven rotation.

A power tool of any one or more of the embodiments, wherein the handle is unobscured.

A power tool of any one or more of the embodiments, wherein the tool operation further comprises detecting engagement of the input pad, determining a secondary engagement of the input pad, and directing a secondary action of the power tool in response to determining the secondary engagement.

A power tool of any one or more of the embodiments, wherein the secondary engagement of the input pad comprises a variable pressure threshold.

A power tool of any one or more of the embodiments, wherein the secondary action comprises adjusting a blade speed for a cutting implement mounted to the frame.

A power tool of any one or more of the embodiments, wherein the secondary action comprises adjusting a wheel speed for a walking element mounted to the frame in support thereof.

A power tool of any one or more of the embodiments, wherein the secondary action comprises alternating activation of a light source mounted to the frame.

A power tool comprising: a frame; a walking element coupled to the frame; a motor supported on the frame; a handle assembly extending rearwardly from the frame; a touch pad supported on the handle assembly; and a control circuitry in electronic communication with the motor and the touch pad, wherein the control circuitry comprises a processor coupled to a memory storing instructions which, when executed by the processor, cause the control circuitry to execute a tool operation comprising: detecting engagement of the input pad, determining a secondary engagement of the input pad, and directing a secondary action of the power tool in response to determining the secondary engagement.

A power tool of any one or more of the embodiments, wherein the secondary engagement of the input pad comprises a variable pressure threshold.

A power tool of any one or more of the embodiments, wherein the secondary action comprises adjusting a blade speed for a cutting implement mounted to the frame.

A power tool of any one or more of the embodiments, wherein the secondary action comprises adjusting a wheel speed for a walking element mounted to the frame in support thereof.

A power tool of any one or more of the embodiments, wherein the secondary action comprises alternating activation of a light source mounted to the frame.

A power tool of any one or more of the embodiments, wherein the first input pad region is spaced apart from the second input pad region.

A power tool of any one or more of the embodiments, further comprising a cutting implement rotatably mounted to the frame in mechanical communication with the motor for motor-driven rotation.

A power tool of any one or more of the embodiments, further comprising a walking element movably mounted to the frame in support thereof, the walking element being in mechanical communication with the motor for motor-driven rotation.

A power tool of any one or more of the embodiments, wherein the handle is unobscured.

This written description uses examples to disclose the present application, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A power tool comprising:
a housing including a motor;
a work element extending from the housing and operably coupled to the motor;
a handle extending from the housing and comprising a first presence sensor and a second presence sensor, wherein the first presence sensor and the second presence sensor are operable to detect an engaged state in which an operator engages the first presence sensor and the second presence sensor, and a disengaged state in which the operator disengages one or both of the first presence sensor and the second presence sensor; and
a controller operably coupled to the first presence sensor, the second presence sensor, and the motor, wherein the controller is configured to perform a plurality of operations, the plurality of operations comprising:
receiving first data indicative of operator engagement with the first presence sensor,
receiving second data indicative of operator engagement with the second presence sensor,
determining, using the first data and the second data, that the power tool is in the engaged state, and
controlling operation of the motor based on the power tool being in the engaged state.

2. The power tool of claim 1, wherein the plurality of operations further comprises deactivating the motor based on the power tool being in the disengaged state.

3. The power tool of any one of claims 1-2, wherein the first presence sensor comprises a capacitance sensor and the second presence sensor comprises a capacitance sensor.

4. The power tool of any one of claims 1-3, wherein the first presence sensor comprises an impedance sensor and the second presence sensor comprises an impedance sensor.

5. The power tool of any one of claims 1-5, wherein the power tool comprises a log splitter, the log splitter comprising:
a hand or arm rest coupled to the housing adjacent the handle, wherein the second presence sensor is disposed in the hand or arm rest; and
a support arm extending from the housing between a first end and a second end;
wherein the work element comprises a rack coupled to at least a portion of the support arm, the rack configured to move along the support arm in a forward direction to an extended position adjacent the second end and a reverse direction to a starting position adjacent the first end; and
wherein, in the engaged state, the handle is configured to move between a first position in which the motor is activated to move the rack at least in the forward direction along the support arm and a second position in which the motor is deactivated.

6. The power tool of any one of claims 1-5, wherein:
the handle comprises a first handle including a first grip and the power tool further comprises a second handle including a second grip, the first handle extending from a first side of the housing and the second handle extending from a second side of the housing opposite the first side;
the first presence sensor is disposed in the first grip of the first handle and the second presence sensor is disposed in the second grip of the second handle;
the work element comprises an auger; and
the motor is configured to rotate the auger in the engaged state.

7. The power tool of any one of claims 1-5, wherein:
the power tool comprises a chainsaw;
the work element comprises a guide bar defining a cutting track along a perimeter of the guide bar and a cutting implement disposed along the cutting track of the guide bar;
the handle comprises a first handle extending from a rear end of the housing including a first grip and the power tool further comprises a second handle extending from the housing including a second grip;
the first presence sensor is disposed in the first grip of the first handle and the second presence sensor is disposed in the second grip of the second handle; and
the motor is configured to move the cutting implement about the cutting track of the guide bar in the engaged state.

8. The power tool of any one of claims 1-5, wherein:
the power tool comprises a hedge trimmer;
the work element comprises a first blade and a second blade;
the handle comprises a first handle extending from a rear end of the housing including a first grip and the power tool further comprises a second handle extending from the housing including a second grip;
the first presence sensor is disposed in the first grip of the first handle and the second presence sensor is disposed in the second grip of the second handle; and
the motor is configured to reciprocate the first blade and the second blade in the engaged state.

9. The power tool of any one of claims 1-8, further comprising a power source electrically coupled to the motor, wherein the power source is removably couplable to the housing.

10. The power tool of any one of claims 1-9, wherein the housing further comprises one or more touch sensitive controls; wherein the one or more touch sensitive controls comprise one or more capacitance sensors, one or more impedance sensors, or both one or more capacitance sensors and one or more impedance sensors; and wherein the one or more touch sensitive controls are configured to control a speed of the motor.

11. A method of operating a power tool, comprising:
receiving a motor activation signal;
detecting engagement of a first presence sensor;
detecting engagement of a second presence sensor;
activating a motor of the power tool based on engagement of the first presence sensor and the second presence sensor; and
deactivating the motor based on disengagement of one or both of the first presence sensor and the second presence sensor.

12. The method of claim 11, further comprising providing a housing including the motor, a work element extending from the housing and operably coupled to the motor, and a handle extending from the housing and including the first presence sensor; wherein activating the motor comprises activating the work element.

13. A control assembly for a power tool comprising:
at least one presence sensor; and
a controller communicatively coupled to the at least one presence sensor, the controller configured to perform a plurality of operations comprising:
receiving data indicative of operator engagement with the at least one presence sensor,
determining, using the data, that the power tool is in an engaged state based on user engagement with the at least one presence sensor or in a disengaged state based on user disengagement with the at least one presence sensor, and
controlling operation of at least one motor operably coupled to the controller based on the power tool being in the engaged state.

14. The control assembly of claim 13, wherein controlling operation of the at least one motor comprises activating the motor based on the power tool being in the engaged state and deactivating the motor based on the power tool being in the disengaged state.

15. The control assembly of any one of claims 13-14, wherein the plurality of operations further comprises:
detecting a pressure exerted on the at least one presence sensor; and
controlling a secondary operation of the at least one motor in response to pressure detected;
wherein the secondary operation comprises a speed of the at least one motor.
